# EUROPEAN PATENT APPLICATION

(11) **EP 4 145 875 A1**
(43) Date of publication of application: **08.03.2023**
(21) Application number: 21818207.9
(22) Date of filing: 31.03.2021
(51) Int. Cl.: H04W 4/80

(54) **SMART CARD SHARING METHOD, ELECTRONIC DEVICE, AND COMPUTER-READABLE STORAGE MEDIUM**

(30) Priority: 04.06.2020 CN 202010502371
(71) Applicant: Huawei Technologies Co., Ltd., Longgang District, Shenzhen, Guangdong 518129 (CN)
(72) Inventor: YAO, Zhendong, Shenzhen, Guangdong 518129 (CN); SHU, Haw-Wei, Shenzhen, Guangdong 518129 (CN); HSU, Chih-Hsin, Shenzhen, Guangdong 518129 (CN)
(74) Representative: Goddar, Heinz J.
(86) International application number: PCT/CN2021/084665
(87) International publication number: WO 2021/244118

(57) **Abstract**

This application is applicable to the field of terminal technologies, and provides a smart card sharing method, an electronic device, and a computer-readable storage medium. In a smart card sharing system in this application, a first electronic device shares a communications parameter of a first near field communication NFC virtual card with a second electronic device. When receiving a first transaction request corresponding to the communications parameter, the second electronic device sends a first information request to the first electronic device, so that the first electronic device performs processing, and returns first response information to the second electronic device, and the second electronic device sends the first response information to a near field communication NFC card reader, to complete a card swiping operation. In a card swiping process, the second electronic device completes an operation by using a first NFC virtual card of the first electronic device, and may not need to activate a corresponding virtual card, thereby saving resources consumed for repeatedly activating the virtual card.

## Description

This application claims priority to Chinese Patent Application No. 202010502371.5, filed with the China National Intellectual Property Administration on June 4, 2020 and entitled "SMART CARD SHARING METHOD, ELECTRONIC DEVICE, AND COMPUTER-READABLE STORAGE MEDIUM", which is incorporated herein by reference in its entirety.

### TECHNICAL FIELD

This application pertains to the field of terminal technologies, and in particular, to a smart card sharing method, an electronic device, and a computer-readable storage medium.

### BACKGROUND

A near field communication (Near Field Communication, NFC) technology is developed based on a contactless radio frequency identification technology in combination with a wireless interconnection technology. An electronic device can simulate various smart cards by using the NFC technology.

However, if a user expects the electronic device to simulate a smart card, the user needs to activate a corresponding smart card on the electronic device. Currently, a card activation fee usually needs to be paid to activate a card on the electronic device.

Therefore, when the user has a plurality of electronic devices, if the user expects all the plurality of electronic devices to simulate a smart card, the user needs to activate a card on all the plurality of electronic devices. This causes a waste of resources to some extent.

### SUMMARY

This application provides a smart card sharing method, an electronic device, and a computer-readable storage medium, to resolve a problem in the conventional technology that when a smart card is used on a plurality of electronic devices, a smart card needs to be activated on each electronic device, causing a waste of resources.

To achieve the foregoing objectives, the following technical solutions are used in this application.

According to a first aspect, a smart card sharing system is provided, and includes a first electronic device and a second electronic device.

The first electronic device and the second electronic device establish a communication connection.

The first electronic device has a first near field communication NFC virtual card.

The first electronic device is configured to:
receive a first operation of a user; and
send a communications parameter of the first NFC virtual card to the second electronic device in response to the first operation.

The second electronic device is configured to:
receive and store the communications parameter; and
send a first information request to the first electronic device when receiving a first transaction request that is sent by an NFC card reader and that corresponds to the communications parameter, where the first information request is used to obtain transaction information of the first NFC virtual card.

The first electronic device is further configured to:
receive the first information request, and send first response information to the second electronic device, so that the second electronic device completes a transaction with the NFC card reader, where the first response information includes the transaction information of the first NFC virtual card.

It should be noted that the virtual card is a non-entity smart card on an electronic device.

When receiving the first operation of the user, the first electronic device may send the communications parameter of the first NFC virtual card to the second electronic device in response to the first operation.

The first NFC virtual card may be directly a currently activated smart card on the first electronic device by default. Alternatively, the target virtual card may be determined based on the first operation. In this case, the first operation may include an operation of selecting the first NFC virtual card, to determine the first NFC virtual card.

When obtaining the first transaction request that is sent by the NFC card reader and that corresponds to the communications parameter, the second electronic device does not locally process the first transaction request, but sends the first information request to the first electronic device, and obtains the transaction information of the first NFC virtual card by using the first information request.

The first transaction request includes some or all of the foregoing communications parameters. The first transaction request and the first information request may be a same request, or the first transaction request and the first information request may be different requests.

For example, after receiving the first transaction request, the second electronic device directly forwards the first transaction request to the first electronic device. In this case, the first transaction request and the first information request are a same request. Alternatively, after receiving the first transaction request, the second electronic device may process the first transaction request, for example, perform processing such as format conversion or communications parameter extraction, to obtain the first information request, and then send the first information request to the first electronic device. In this case, the first transaction request and the first information request are different requests.

After receiving the first information request, the first electronic device processes the first information request to obtain first response information, and returns the first response information to the second electronic device, where the first response information includes the transaction information of the first NFC virtual card.

After receiving the first response information, the second electronic device forwards the first response information to the NFC card reader, to complete a card swiping operation.

In a card swiping process, the second electronic device completes an operation by using the first NFC virtual card of the first electronic device, and the second electronic device may not need to activate a corresponding virtual card, so that resources consumed for repeatedly activating a same type of virtual card on a plurality of electronic devices can be saved.

In a possible implementation of the first aspect, the first electronic device is communicatively connected to the second electronic device through a Bluetooth connection channel or a Wi-Fi connection channel.

It should be noted that the first electronic device may also be communicatively connected to the second electronic device through the Bluetooth connection channel or the Wi-Fi connection channel. In this case, because transmission distances of the Bluetooth connection channel and the Wi-Fi connection channel are short, a proper distance needs to be kept between the first electronic device and the second electronic device.

In a possible implementation of the first aspect, the first electronic device is communicatively connected to the second electronic device through a cellular network connection channel.

It should be noted that the first electronic device may also be communicatively connected to the second electronic device through the cellular network connection channel. In this case, the first electronic device and the second electronic device may transmit data at a long distance, to reduce a distance limitation, and improve convenience and practicability of the smart card sharing method, so that the smart card sharing method is applicable to more application scenarios.

In a possible implementation of the first aspect, the first electronic device is further configured to:
send a transaction completion notification to the second electronic device when receiving the transaction completion notification.

The second electronic device is further configured to:
perform a preset prompt operation when receiving the transaction completion notification.

It should be noted that, after completing a card swiping operation, the first electronic device may receive a transaction completion notification sent by a remote server.

In this case, the first electronic device may send the transaction completion notification to the second electronic device, and the second electronic device performs a preset prompt operation, so that the user learns of transaction completion information by using the second electronic device.

In a possible implementation of the first aspect, the preset prompt operation includes vibrating and/or displaying preset text information.

It should be noted that content of the preset prompt operation may be set based on an actual situation.

The preset prompt operation may be vibrating, and the second electronic device prompts, through vibrating, the user with a fact that the transaction is completed.

Alternatively, the preset prompt operation may be displaying preset text information. For example, the second electronic device displays "Transaction success" on a screen, and after seeing the text information displayed by the second electronic device, the user may learn that the transaction is completed.

Alternatively, the preset prompt operation may be vibrating and displaying preset text information.

Alternatively, the preset prompt operation may be another prompt manner and a combination thereof, for example, blinking of a breathing light, sounding of a buzzer, or voice broadcasting.

According to a second aspect, a smart card sharing method is provided, and is applied to a first electronic device. The method includes:
obtaining a first information request sent by a second electronic device communicatively connected to the first electronic device, where the first information request is used to obtain transaction information of a first near field communication NFC virtual card;
processing the first information request to obtain first response information, where the first response information includes the transaction information of the first NFC virtual card; and
sending the first response information to the second electronic device, to indicate the second electronic device to forward the first response information to an NFC card reader corresponding to the first information request.

It should be noted that, after receiving the first information request, the first electronic device processes the first information request to obtain the first response information, and returns the first response information to the second electronic device.

After receiving the first response information, the second electronic device forwards the first response information to the NFC card reader, to complete a card swiping operation.

In a card swiping process, the second electronic device completes an operation by using the first NFC virtual card of the first electronic device, and the second electronic device may not need to activate a corresponding virtual card, so that resources consumed for repeatedly activating a same type of virtual card on a plurality of electronic devices can be saved.

In a possible implementation of the second aspect, before the obtaining a first information request sent by a second electronic device communicatively connected to the first electronic device, the method includes:
receiving a first operation of a user; and
sending a communications parameter of the first NFC virtual card to the second electronic device in response to the first operation.

It should be noted that, when receiving the first operation of the user, the first electronic device may send the communications parameter of the first NFC virtual card to the second electronic device in response to the first operation.

The first NFC virtual card may be directly a currently activated smart card on the first electronic device by default. Alternatively, the target virtual card may be determined based on the first operation. In this case, the first operation may include an operation of selecting the first NFC virtual card, to determine the first NFC virtual card.

In a possible implementation of the second aspect, the obtaining a first information request sent by a second electronic device communicatively connected to the first electronic device includes:
obtaining the first information request sent by the second electronic device through a wireless connection channel.

It should be noted that the second electronic device may send the first information request to the first electronic device through the wireless connection channel.

Transmitting the first information request in a wireless transmission manner can improve convenience and practicability of the smart card sharing method, so that the smart card sharing method is applicable to more application scenarios.

In a possible implementation of the second aspect, the wireless connection channel is a Bluetooth connection channel or a Wi-Fi connection channel.

It should be noted that the wireless connection channel may be the Bluetooth connection channel or the Wi-Fi connection channel. In this case, because transmission distances of the Bluetooth connection channel and the Wi-Fi connection channel are short, a proper distance needs to be kept between the first electronic device and the second electronic device.

In a possible implementation of the second aspect, the wireless connection channel is a cellular network connection channel.

It should be noted that the wireless connection channel may also be the cellular network connection channel. In this case, the first electronic device and the second electronic device may transmit data at a long distance, to reduce a distance limitation, and improve convenience and practicability of the smart card sharing method, so that the smart card sharing method is applicable to more application scenarios.

In a possible implementation of the second aspect, the sending the first response information to the second electronic device further includes:
sending a transaction completion notification to the second electronic device when receiving the transaction completion notification.

It should be noted that, after completing a card swiping operation, the first electronic device may receive a transaction completion notification sent by a remote server.

In this case, the first electronic device may send the transaction completion notification to the second electronic device, so that the user learns of transaction completion information by using the second electronic device.

According to a third aspect, a smart card sharing method is provided, and is applied to a second electronic device. The method includes:
obtaining a first transaction request sent by a near field communication NFC card reader;
sending a first information request to a first electronic device, where the first information request is used to obtain transaction information of a first NFC virtual card; and
obtaining first response information returned by the first electronic device, and forwarding the first response information to the NFC card reader, where the first response information includes the transaction information of the first NFC virtual card.

It should be noted that, when obtaining the first transaction request that is sent by the NFC card reader and that corresponds to the communications parameter, the second electronic device does not locally process the first transaction request, but sends the first information request to the first electronic device, where the first information request is used to obtain the transaction information of the first NFC virtual card.

After receiving the first information request, the first electronic device processes the first information request to obtain the first response information, and returns the first response information to the second electronic device.

After receiving the first response information, the second electronic device forwards the first response information to the NFC card reader, to complete a card swiping operation.

In a card swiping process, the second electronic device completes an operation by using the first NFC virtual card of the first electronic device, and the second electronic device may not need to activate a corresponding virtual card, so that resources consumed for repeatedly activating a same type of virtual card on a plurality of electronic devices can be saved.

In a possible implementation of the third aspect, before the obtaining a first transaction request sent by a near field communication NFC card reader, the method includes:
receiving and storing a communications parameter that is of the first NFC virtual card and that is sent by the first electronic device.

Correspondingly, the obtaining a first transaction request sent by a near field communication NFC card reader includes:
obtaining the first transaction request that is sent by the NFC card reader and that corresponds to the communications parameter.

It should be noted that, when the second electronic device needs to simulate a smart card, the second electronic device needs to have a corresponding communications parameter of a virtual card.

The communications parameter of the virtual card may be directly shared by the first electronic device. In this case, the second electronic device obtains and stores the communications parameter that is of the first NFC virtual card and that is sent by the first electronic device.

Alternatively, the communications parameter of the virtual card may be obtained in another manner. For example, the first electronic device may upload the communications parameter of the first NFC virtual card to a cloud server, and the second electronic device downloads the communications parameter of the first NFC virtual card from the cloud server.

After obtaining the communications parameter of the first NFC virtual card, the second electronic device may simulate the first NFC virtual card. When obtaining the first transaction request corresponding to the communications parameter of the first NFC virtual card, the second electronic device sends the first information request to the first electronic device for processing.

In a possible implementation of the third aspect, the obtaining a first transaction request sent by a near field communication NFC card reader includes:
when NFC field strength is detected and the NFC field strength is greater than a preset field strength threshold, establishing an NFC connection channel with the NFC card reader corresponding to the NFC field strength; and
obtaining the first transaction request sent by the NFC card reader through the NFC connection channel.

It should be noted that the NFC card reader generates NFC field strength when working. When the second electronic device detects the NFC field strength, and the NFC field strength is greater than a preset field strength threshold, it indicates that the second electronic device is within an NFC working range, and the second electronic device and the NFC card reader are at a proper near field communication distance.

In this case, the second electronic device may establish an NFC connection channel with the NFC card reader, and the second electronic device exchanges data with the NFC card reader through the NFC connection channel.

In a possible implementation of the third aspect, after the sending a first information request to a first electronic device, the method further includes:
starting a target timer;
sending a wait request to the NFC card reader when the target timer expires and the first response information returned by the first electronic device is not received; and
restarting the target timer when receiving a wait response returned by the NFC card reader.

Correspondingly, the obtaining first response information returned by the first electronic device, and forwarding the first response information to the NFC card reader includes:
obtaining the first response information returned by the first electronic device, forwarding the first response information to the NFC card reader, and disabling the target timer.

It should be noted that, because the first information request is processed by the first electronic device, it needs to take a specific time to perform three actions of sending the first information request to the first electronic device, processing the first information request by the first electronic device, and sending the first response information by the first electronic device to the second electronic device.

To avoid a card swiping failure caused by a long time consumed in a card swiping process, a target timer may be disposed on the second electronic device, and timing duration is set for the target timer.

The second electronic device starts the target timer after sending the first information request to the first electronic device.

If the target timer expires and the first response information returned by the first electronic device is not received, the second electronic device may send a waiting request to the NFC card reader, to request the NFC card reader to continue waiting.

When receiving a waiting response returned by the NFC card reader, the second electronic device restarts the target timer to perform timing again.

If the target timer continues to expire, the foregoing steps are repeated until the first response information returned by the first electronic device is received.

After obtaining the first response information returned by the first electronic device, the second electronic device forwards, to the NFC card reader, the first response information returned by the first electronic device, and disables the target timer.

The target timer is set to periodically request the NFC card reader to keep waiting. This can avoid a card swiping failure caused by a long time consumed in a card swiping process, improve a card swiping success rate, and provide better use experience for a user.

In a possible implementation of the third aspect, the sending a first information request to a first electronic device includes:
sending the first information request to the first electronic device through a wireless connection channel.

It should be noted that the second electronic device may forward the first information request to the first electronic device through the wireless connection channel.

Transmitting the first information request in a wireless transmission manner can improve convenience and practicability of the smart card sharing method, so that the smart card sharing method is applicable to more application scenarios.

In a possible implementation of the third aspect, the wireless connection channel is a Bluetooth connection channel or a Wi-Fi connection channel.

It should be noted that the wireless connection channel may be the Bluetooth connection channel or the Wi-Fi connection channel. In this case, because transmission distances of the Bluetooth connection channel and the Wi-Fi connection channel are short, a proper distance needs to be kept between the first electronic device and the second electronic device.

In a possible implementation of the third aspect, the wireless connection channel is a cellular network connection channel.

It should be noted that the wireless connection channel may also be the cellular network connection channel. In this case, the first electronic device and the second electronic device may transmit data at a long distance, to reduce a distance limitation, and improve convenience and practicability of the smart card sharing method, so that the smart card sharing method is applicable to more application scenarios.

In a possible implementation of the third aspect, after the obtaining first response information returned by the first electronic device, and forwarding the first response information to the NFC card reader, the method further includes:
performing a preset prompt operation when receiving a transaction completion notification sent by the first electronic device.

It should be noted that, after completing a card swiping operation, the first electronic device may receive a transaction completion notification sent by a remote server.

In this case, the first electronic device may send the transaction completion notification to the second electronic device.

When receiving the transaction completion notification, the second electronic device may perform a preset prompt operation, to remind the user that the transaction is completed.

In a possible implementation of the third aspect, the performing a preset prompt operation when receiving a transaction completion notification sent by the first electronic device includes:
vibrating and/or displaying preset text information when receiving the transaction completion notification sent by the first electronic device.

It should be noted that content of the preset prompt operation may be set based on an actual situation.

The preset prompt operation may be vibrating, and the second electronic device prompts, through vibrating, the user with a fact that the transaction is completed.

Alternatively, the preset prompt operation may be displaying preset text information. For example, the second electronic device displays "Transaction success" on a screen, and after seeing the text information displayed by the second electronic device, the user may learn that the transaction is completed.

Alternatively, the preset prompt operation may be vibrating and displaying preset text information.

Alternatively, the preset prompt operation may be another prompt manner and a combination thereof, for example, blinking of a breathing light, sounding of a buzzer, or voice broadcasting.

According to a fourth aspect, an electronic device is provided, and includes:
a first request module, configured to obtain a first information request sent by a second electronic device communicatively connected to the first electronic device, where the first information request is used to obtain transaction information of a first near field communication NFC virtual card;
a first response module, configured to process the first information request to obtain first response information, where the first response information includes the transaction information of the first NFC virtual card; and
a first sending module, configured to send the first response information to the second electronic device, to indicate the second electronic device to forward the first response information to an NFC card reader corresponding to the first information request.

In a possible implementation of the fourth aspect, the electronic device further includes:
a sharing instruction module, configured to receive a first operation of a user; and
a parameter sharing module, configured to send a communications parameter of the first NFC virtual card to the second electronic device in response to the first operation.

In a possible implementation of the fourth aspect, the first request module is specifically configured to obtain the first information request sent by the second electronic device through a wireless connection channel.

In a possible implementation of the fourth aspect, the wireless connection channel is a Bluetooth connection channel or a Wi-Fi connection channel.

In a possible implementation of the fourth aspect, the wireless connection channel is a cellular network connection channel.

In a possible implementation of the fourth aspect, the electronic device further includes:
a completion notification module, configured to send a transaction completion notification to the second electronic device when receiving the transaction completion notification.

According to a fifth aspect, an electronic device is provided, and includes:
a second request module, configured to obtain a first transaction request sent by a near field communication NFC card reader;
a request forwarding module, configured to send a first information request to a first electronic device, where the first information request is used to obtain transaction information of a first NFC virtual card; and
a second response module, configured to: obtain first response information returned by the first electronic device, and forward the first response information to the NFC card reader, where the first response information includes the transaction information of the first NFC virtual card.

In a possible implementation of the fifth aspect, the electronic device further includes:
a parameter receiving module, configured to: receive and store a communications parameter that is of the first NFC virtual card and that is sent by the first electronic device.

Correspondingly, the second request module is specifically configured to obtain the first transaction request that is sent by the NFC card reader and that corresponds to the communications parameter.

In a possible implementation of the fifth aspect, the second request module includes:
a channel submodule, configured to: when NFC field strength is detected and the NFC field strength is greater than a preset field strength threshold, establish an NFC connection channel with the NFC card reader corresponding to the NFC field strength; and
a request submodule, configured to obtain the first transaction request sent by the NFC card reader through the NFC connection channel.

In a possible implementation of the fifth aspect, the electronic device further includes:
a timing starting module, configured to start a target timer;
a third request module, configured to send a wait request to the NFC card reader when the target timer expires and the first response information returned by the first electronic device is not received; and
a third response module, configured to restart the target timer when receiving a wait response returned by the NFC card reader.

Correspondingly, the second response module is specifically configured to: obtain the first response information returned by the first electronic device, forward the first response information to the NFC card reader, and disable the target timer.

In a possible implementation of the fifth aspect, the request forwarding module is specifically configured to send the first information request to the first electronic device through a wireless connection channel.

In a possible implementation of the fifth aspect, the wireless connection channel is a Bluetooth connection channel or a Wi-Fi connection channel.

In a possible implementation of the fifth aspect, the wireless connection channel is a cellular network connection channel.

In a possible implementation of the fifth aspect, the electronic device further includes:
a notification prompt module, configured to perform a preset prompt operation when receiving a transaction completion notification sent by the first electronic device.

In a possible implementation of the fifth aspect, the notification prompt module is specifically configured to: vibrate and/or display the preset text information when receiving the transaction completion notification sent by the first electronic device.

According to a sixth aspect, an electronic device is provided, and includes a memory, a processor, and a computer program that is stored in the memory and that can be run on the processor. When the processor executes the computer program, the electronic device implements the steps of the foregoing methods.

According to a seventh aspect, a computer-readable storage medium is provided. The computer-readable storage medium stores a computer program, and when the computer program is executed by a processor, an electronic device is enabled to implement the steps of the foregoing methods.

Compared with the conventional technology, embodiments of this application have the following beneficial effects.

In the smart card sharing method provided in this application, the first electronic device shares the communications parameter of the first virtual card with the second electronic device, and when receiving the first transaction request corresponding to the communications parameter, the second electronic device sends the first information request to the first electronic device, so that the first electronic device performs processing, and returns the first response information to the second electronic device, and the second electronic device sends the first response information to the near field communication NFC card reader, to complete a card swiping operation.

To be specific, in a card swiping process, the second electronic device completes an operation by using the first NFC virtual card of the first electronic device, and the second electronic device may not need to activate a corresponding virtual card, thereby saving resources consumed for repeatedly activating the virtual card, and resolving a problem in the conventional technology that when a smart card is used on a plurality of electronic devices, a smart card needs to be activated on each electronic device, causing a waste of resources, which has high practicability and usability.

### BRIEF DESCRIPTION OF DRAWINGS

FIG. 1 is a schematic diagram of a structure of a smart card sharing system according to an embodiment of this application;
FIG. 2 is a schematic diagram of an NFC chip according to an embodiment of this application;
FIG. 3 is a schematic diagram of an application scenario according to an embodiment of this application;
FIG. 4 is a schematic diagram of another application scenario according to an embodiment of this application;
FIG. 5 is a schematic diagram of another application scenario according to an embodiment of this application;
FIG. 6 is a schematic diagram of another application scenario according to an embodiment of this application;
FIG. 7 is a schematic diagram of another application scenario according to an embodiment of this application;
FIG. 8 is a schematic diagram of another application scenario according to an embodiment of this application;
FIG. 9 is a schematic diagram of another application scenario according to an embodiment of this application;
FIG. 10 is a schematic diagram of another application scenario according to an embodiment of this application;
FIG. 11 is a schematic diagram of another application scenario according to an embodiment of this application;
FIG. 12 is a schematic diagram of another application scenario according to an embodiment of this application;
FIG. 13 is a schematic diagram of another application scenario according to an embodiment of this application;
FIG. 14 is a schematic diagram of another NFC chip according to an embodiment of this application;
FIG. 15 is a signaling diagram according to an embodiment of this application;
FIG. 16 is a schematic diagram of a transfer direction of an APDU instruction according to an embodiment of this application;
FIG. 17 is a schematic diagram of a transfer direction of an APDU response according to an embodiment of this application;
FIG. 18 is a schematic diagram of another NFC chip according to an embodiment of this application;
FIG. 19 is another signaling diagram according to an embodiment of this application;
FIG. 20 is a schematic diagram of a terminal status according to an embodiment of this application;
FIG. 21 is a schematic diagram of another application scenario according to an embodiment of this application;
FIG. 22 is a schematic diagram of another application scenario according to an embodiment of this application;
FIG. 23 is a schematic diagram of another application scenario according to an embodiment of this application;
FIG. 24 is a schematic diagram of another application scenario according to an embodiment of this application;
FIG. 25 is a schematic diagram of another application scenario according to an embodiment of this application;
FIG. 26 is a schematic diagram of another application scenario according to an embodiment of this application;
FIG. 27 is a schematic diagram of another application scenario according to an embodiment of this application;
FIG. 28 is a schematic diagram of another application scenario according to an embodiment of this application;
FIG. 29 is a schematic diagram of another application scenario according to an embodiment of this application;
FIG. 30 is a schematic diagram of another application scenario according to an embodiment of this application;
FIG. 31 is a schematic diagram of another application scenario according to an embodiment of this application;
FIG. 32 is a schematic diagram of another application scenario according to an embodiment of this application;
FIG. 33 is a schematic diagram of another application scenario according to an embodiment of this application;
FIG. 34 is a schematic diagram of another application scenario according to an embodiment of this application;
FIG. 35 is a schematic diagram of a structure of an electronic device according to an embodiment of this application;
FIG. 36 is a schematic diagram of a structure of another electronic device according to an embodiment of this application;
FIG. 37 is a schematic diagram of a structure of another electronic device according to an embodiment of this application; and
FIG. 38 is a schematic diagram of a structure of a mobile phone according to an embodiment of this application.

### DESCRIPTION OF EMBODIMENTS

In the following descriptions, for illustration instead of limitation, specific details such as a particular system structure and a technology are provided to make a thorough understanding of embodiments of this application. However, a person skilled in the art should know that this application may also be implemented in other embodiments without these specific details. In other cases, detailed descriptions of well-known systems, apparatuses, circuits, and methods are omitted, so that this application is described without being obscured by unnecessary details.

It should be understood that, when used in the specification and claims of this application, the term "include" indicates presence of described features, entireties, steps, operations, elements, and/or components, but does not exclude presence or addition of one or more other features, entireties, steps, operations, elements, components, and/or collections thereof.

It should also be understood that the term "and/or" used in the specification and the appended claims of this application refers to any combination and all possible combinations of one or more associated listed items, and includes these combinations.

As used in the specification and the appended claims of this application, according to the context, the term "if" may be interpreted as "when", "once", "in response to determining", or "in response to detecting". Similarly, according to the context, the phrase "if it is determined that" or "if (a stated condition or event) is detected" may be interpreted as a meaning of "once it is determined that", "in response to determining", "once (a stated condition or event) is detected", or "in response to detecting (a stated condition or event)".

In addition, in the descriptions of the specification and claims of this application, the terms "first", "second", "third", and the like are merely intended for a purpose of differentiated description, but shall not be understood as an indication or an implication of relative importance.

Referring to "an embodiment", "some embodiments", or the like in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and variants thereof all mean "include but are not limited to", unless otherwise specifically emphasized in another manner.

A near field communication (Near Field Communication, NFC) technology is developed based on a contactless radio frequency identification technology in combination with a wireless interconnection technology. An electronic device may simulate various smart cards by using the NFC technology, for example, smart cards such as a bus card, an access control card, a bank card, an intelligent lock, and an NFC vehicle key.

However, if a user expects the electronic device to simulate a smart card, the user needs to activate a corresponding smart card on the electronic device. For example, if the user expects a mobile phone to implement a function of the bus card, the user needs to first activate an electronic bus card on the mobile phone.

Usually, a specific card activation fee needs to be paid to activate a card on an electronic device. For example, currently, many bus cards require a card activation fee of 20 yuan to 30 yuan. Therefore, when the user has a plurality of electronic devices, if the user expects all the plurality of electronic devices to simulate a smart card, the user needs to activate a card on all the plurality of electronic devices. This causes a waste of resources to some extent.

In addition, currently, most smart cards are activated in an anonymous manner. If a smart card is activated on each electronic device, once the user replaces the electronic device or the electronic device is lost, a balance in the smart card of the electronic device cannot be retrieved, which easily causes an unnecessary loss.

In view of this, embodiments of this application provide a smart card sharing method, an apparatus, an electronic device, and a computer-readable storage medium, so that a plurality of electronic devices can share a smart card, to resolve a problem in the conventional technology that when a smart card is used on a plurality of electronic devices, a smart card needs to be activated on each electronic device, causing a waste of resources.

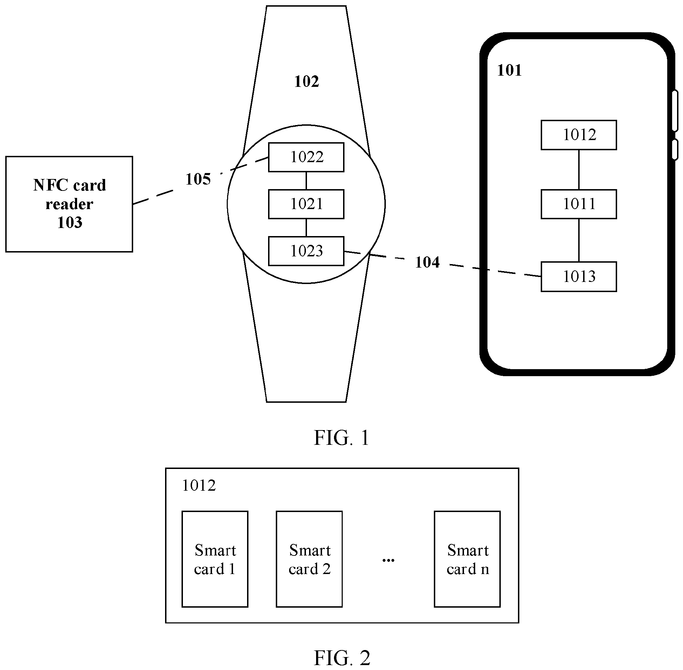

A smart card sharing system shown in FIG. 1 is first used as an example to describe each electronic device to be involved in this application.

As shown in FIG. 1, the smart card sharing system includes a first electronic device 101, a second electronic device 102, and an NFC card reader 103.

The first electronic device 101 represents an electronic device on which a smart card is activated, and the second electronic device 102 represents an electronic device that requests to share the smart card.

The first electronic device 101 includes a processor 1011, an NFC chip 1012, and a wireless communications module 1013.

The second electronic device 102 includes a processor 1021, an NFC chip 1022, and a wireless communications module 1023.

The NFC chip may implement contactless communication between the electronic device and the NFC card reader 103. The NFC chip may allow the electronic device to perform near field communication with the NFC card reader 103 at a low data rate (for example, 106 Kbps), and may comply with any appropriate standard, for example, any one or more of standards such as IS0/IEC 7816, IS0/IEC 18092, ECMA-340, IS0/IEC 21481, ECMA-352, IS0 14443, and ISO 15693. In addition, the NFC chip may also allow the electronic device to perform near field communication with the NFC card reader 103 at a high data rate (for example, 560 Mbps), and may comply with any appropriate standard, for example, the Transfer Jet^{™} protocol.

A specific type of the wireless communications module may be selected based on an actual situation. For example, the wireless communications module may include one or more of modules such as a Bluetooth (Bluetooth, BT) module, a wireless fidelity (wireless fidelity, Wi-Fi) module, and a cellular network module.

The first electronic device 101 may establish a wireless connection channel 104 with the wireless communications module 1023 of the second electronic device 102 by using the wireless communications module 1013. The wireless communications module 1013 and the wireless communications module 1023 need to include at least one wireless communications module of a same type. Otherwise, the wireless communications module 1013 and the wireless communications module 1023 cannot establish the wireless connection channel 104.

For example, assuming that the wireless communications module 1013 includes a Bluetooth module and a cellular network module, the wireless communications module 1023 needs to include at least one of a Bluetooth module and a cellular network module. For example, the wireless communications module 1023 may include the Bluetooth module and a Wi-Fi module. In this case, the wireless communications module 1013 and the wireless communications module 1023 each include the Bluetooth module, so that the wireless communications module 1013 and the wireless communications module 1023 can establish a Bluetooth connection channel. Assuming that the wireless communications module 1023 includes only the Wi-Fi module, neither the Bluetooth module nor the cellular network module in the wireless communications module 1013 can establish a wireless connection channel 104 with the Wi-Fi module in the wireless communications module 1023.

When the second electronic device 102 and the NFC card reader 103 are at a proper short-range distance (for example, in a range from 0 centimeters to 4 centimeters), the NFC chip 1022 of the second electronic device 102 may establish an NFC connection channel 105 with the NFC card reader 103.

It may be understood that specific types of the first electronic device 101 and the second electronic device 102 may be set based on an actual situation. For example, the electronic device may be any one of electronic devices such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, and a personal digital assistant (personal digital assistant, PDA). A specific type of the electronic device is not limited in this embodiment of this application.

By way of example but not limitation, when the terminal device is a wearable device, the wearable device may alternatively be a generic term for wearable devices such as glasses, gloves, watches, clothes, and shoes that are developed based on intelligent design of daily wearing by using wearable technologies. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-size devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

The following describes, in detail based on the smart card sharing system shown in FIG. 1 and with reference to a specific application scenario, a smart card sharing method provided in embodiments of this application.

First, the first electronic device 101 may share a communications parameter of a smart card (that is, the foregoing NFC virtual card) with the second electronic device 102 in response to a first operation of a user.

As shown in FIG. 2, the NFC chip 1012 of the first electronic device 101 may manage one activated smart card, or may manage a plurality of activated smart cards, for example, a smart card 1, a smart card 2, to a smart card n in FIG. 2, where n is a positive integer greater than 2. The first electronic device 101 may establish a wireless connection channel 104 with the second electronic device 102, and determine, based on a selection operation of a user, a smart card that needs to be shared. Alternatively, the first electronic device 101 may share a currently activated smart card by default.

Then, the processor 1011 of the first electronic device 101 obtains, from the NFC chip 1012, a communications parameter of the smart card (that is, the foregoing first NFC virtual card) that needs to be shared, and transfers the communications parameter of the smart card to the wireless communications module 1023 of the second electronic device 102 by using the wireless communications module 1013.

After obtaining, by using the wireless communications module 1023, the communications parameter of the smart card shared by the first electronic device 101, the processor 1021 of the second electronic device 102 stores the communications parameter of the smart card in the NFC chip 1022 for management.

A type of the wireless connection channel 104 may be selected based on an actual situation. For example, the wireless connection channel 104 may be any one or more of channels such as a Bluetooth connection channel, a Wi-Fi connection channel, and a cellular network connection channel.

The communications parameter of the smart card may be determined according to a specifically selected NFC communications protocol and based on a type of the smart card. For example, when the first electronic device 101 and the second electronic device 102 select the ISO 14443 protocol, if the smart card that needs to be shared is a bus card, the communications parameter that is of the smart card and that needs to be shared by the first electronic device 101 with the second electronic device 102 may include one or more of parameters such as a unique identifier (unique identifier, UID) of an NFC card, an NFC answer to request-type A (answer to request-type A, ATQA), a select acknowledge (select acknowledge, SAK), and an answer to select (answer to select, ATS).

The following describes the foregoing smart card parameter configuration steps with reference to a specific application scenario.

### Application scenario 1:

In this application scenario, it is assumed that the first electronic device 101 is a mobile phone, and the second electronic device 102 is a smartwatch. The wireless communications module 1013 includes a first Bluetooth module, the wireless communications module 1023 includes a second Bluetooth module, and the mobile phone establishes a Bluetooth connection channel with the second Bluetooth module of the smartwatch by using the first Bluetooth module.

When the mobile phone and the smartwatch establish a Bluetooth connection channel for the first time, the mobile phone may enter a working state from a sleep state in response to an operation such as a press operation performed by a user on a physical button of the mobile phone or a touch operation performed by a user on a display of the mobile phone, and enter a home page of the mobile phone.

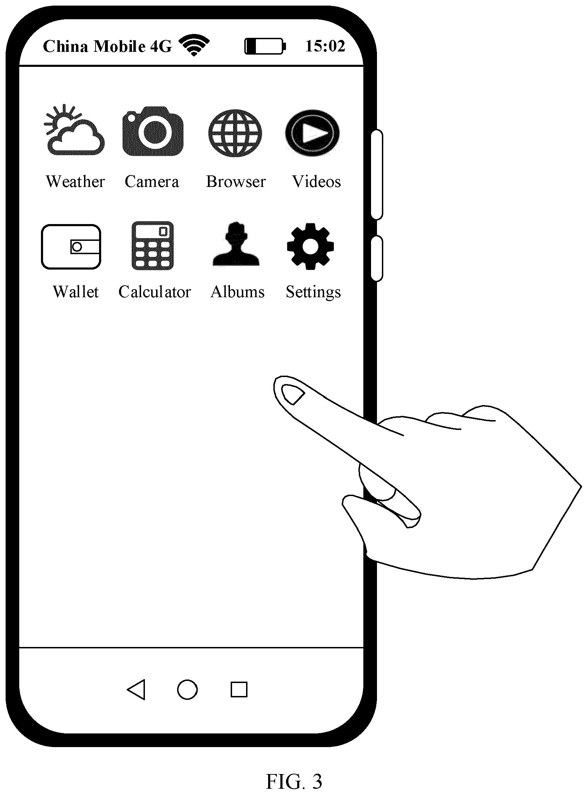

As shown in FIG. 3, the home page of the mobile phone may include one or more icons, for example, icons such as "Weather", "Camera", "Browser", "Videos", "Wallet", "Calculator", "Albums", and "Settings". When the user operates these icons, the mobile phone may enter corresponding applications or system functions.

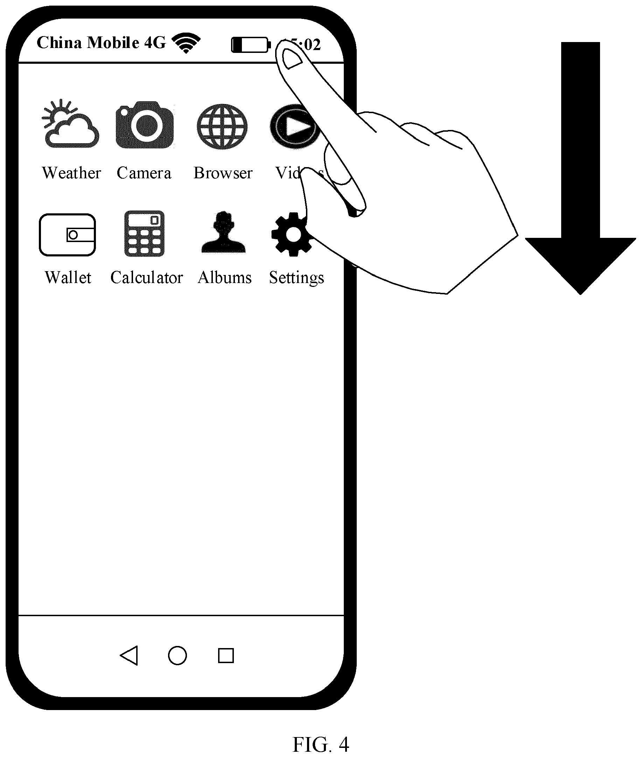

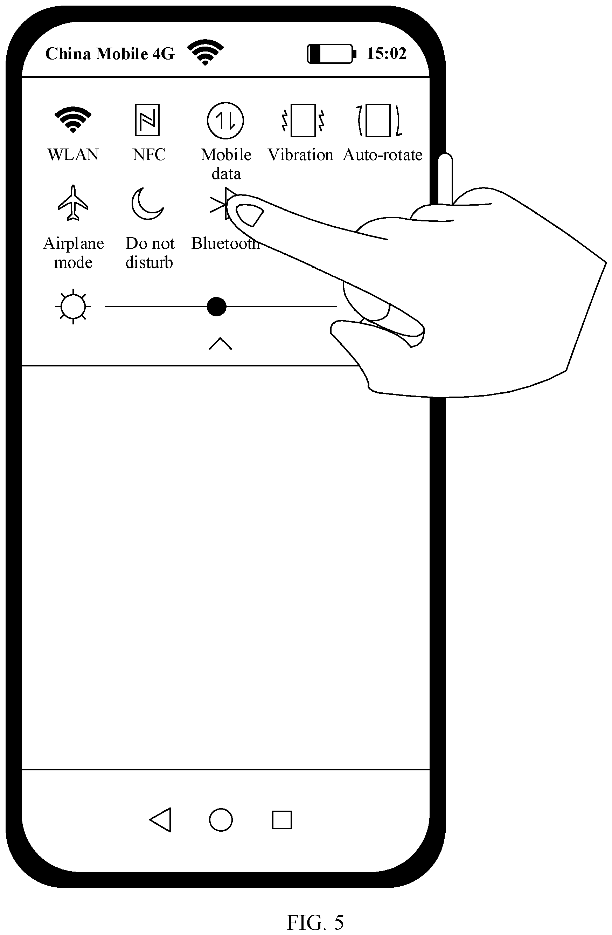

As shown in FIG. 4 and FIG. 5, the mobile phone may invoke a status bar in response to a downward slide operation of the user. In the status bar of the mobile phone, one or more control icons are set, for example, control icons such as "WLAN", "NFC", "Mobile data", "Vibration", "Auto-rotate", "Airplane mode", "Do not disturb", and "Bluetooth".

Then, the mobile phone may enter a Bluetooth function setting page in response to a touch-and-hold tap operation performed by the user on a control icon of a Bluetooth function.

Alternatively, the mobile phone may enter a system setting page in response to a tap operation performed by the user on the icon "Settings" on the home page of the mobile phone.

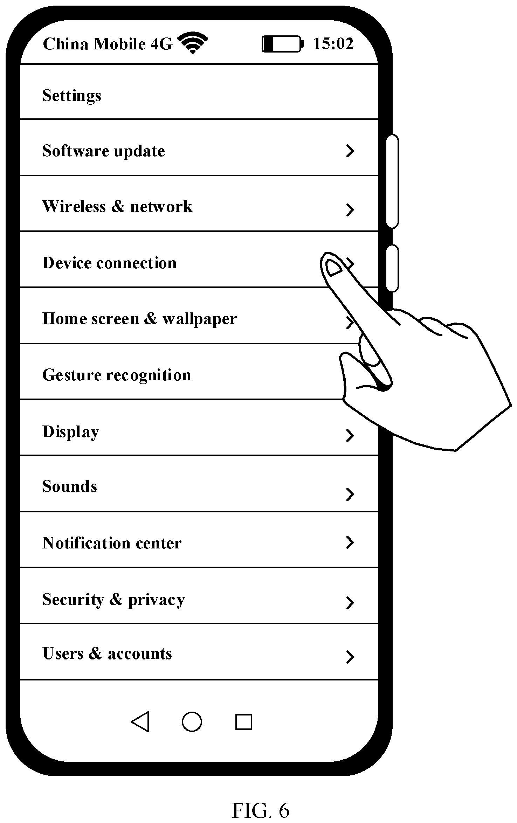

As shown in FIG. 6, the system setting page includes setting options of a plurality of system functions, for example, setting options such as "Software update", "Wireless & network", "Device connection", "Home screen & wallpaper", "Gesture recognition", "Display", "Sounds", "Notification center", "Security & privacy", and "Users & accounts".

The mobile phone may enter a setting page of "Device connection" in response to a tap operation performed by the user on the option "Device connection". The setting page of "Device connection" may include a plurality of setting options of "Device connection", for example, "Bluetooth" and "NFC".

Then, the mobile phone may enter a Bluetooth function setting page in response to a tap operation performed by the user on the option "Bluetooth".

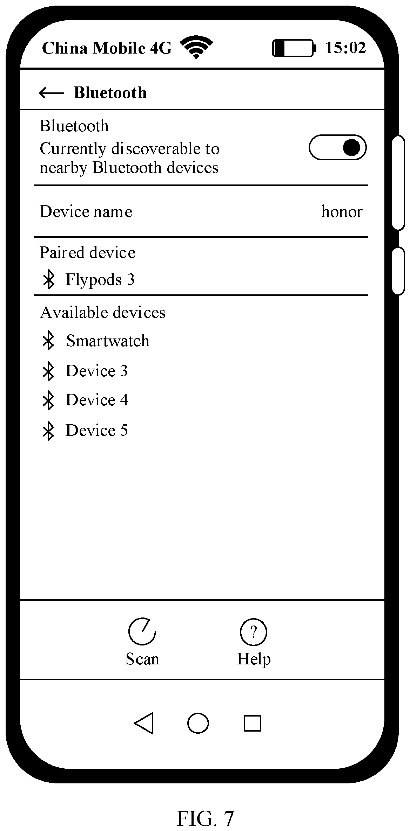

As shown in FIG. 7, the Bluetooth function setting page may include an on/off key of a Bluetooth function and a device name setting option. The mobile phone may enable the Bluetooth function of the mobile phone in response to a tap operation performed by the user on the on/off key of the Bluetooth function.

After the Bluetooth function of the mobile phone is enabled, the mobile phone may display a previously paired device (for example, Flypods 3) and available devices (for example, a smartwatch, a device 3, a device 4, and a device 5). The available device represents an electronic device that is currently found by the electronic device and that can establish a Bluetooth connection. Options "Scan" and "Help" are further set at the bottom of the Bluetooth function setting page. When the user expects to rescan for surrounding electronic devices on which a Bluetooth function is enabled, the mobile phone may rescan, in response to a tap operation performed by the user on the key "Scan", for the surrounding electronic devices on which the Bluetooth function is enabled.

Then, the mobile phone may establish a Bluetooth connection channel with the smartwatch in response to a tap operation performed by the user on an option of the smartwatch in the available devices.

In addition, if the Bluetooth connection between the mobile phone and the smartwatch is not established for the first time, after Bluetooth functions of the mobile phone and the smartwatch are enabled, the mobile phone and the smartwatch may be automatically paired to establish the Bluetooth connection channel.

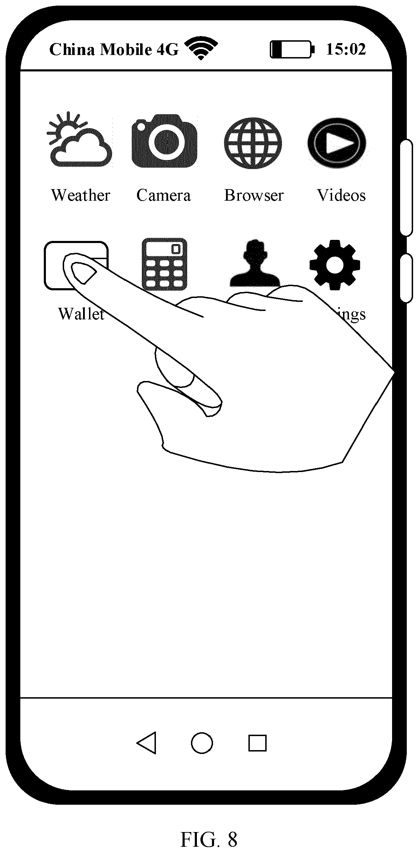

As shown in FIG. 8, after the mobile phone establishes the Bluetooth connection channel with the smartwatch, the mobile phone may return to the home page in response to an operation of the user, and then the mobile phone enters a wallet application in response to a tap operation performed by the user on the icon "Wallet".

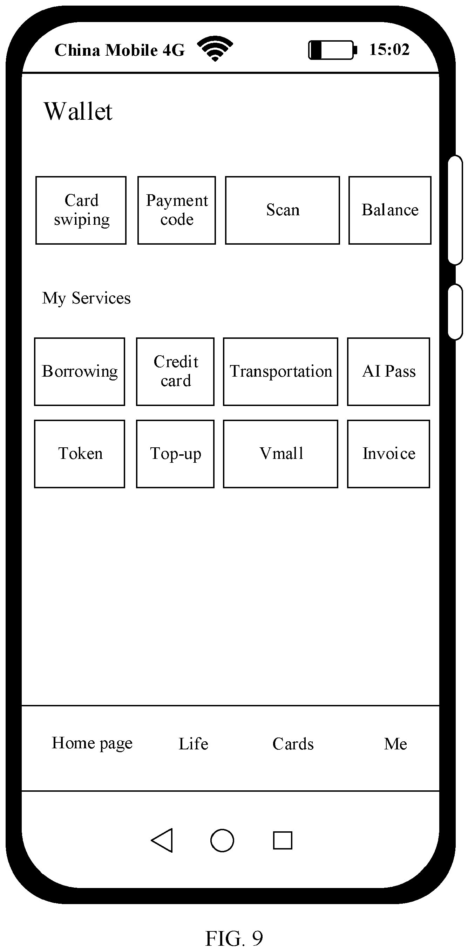

As shown in FIG. 9, a home page of the wallet application may include functions such as "Card swiping", "Payment code", "Scan", and "Balance", and some services provided by the wallet application, such as "Borrowing", "Credit card", "Transportation", "AI Pass", "Token", "Top-up", "Vmall", and "Invoice".

At least one page switching option, for example, "Home page", "Life", "Cards", and "Me", is set at the bottom of the home page of the wallet application. "Home page" is the home page of the wallet application, and the mobile phone may switch to a page of a smart card in response to a tap operation performed by the user on the option "Cards".

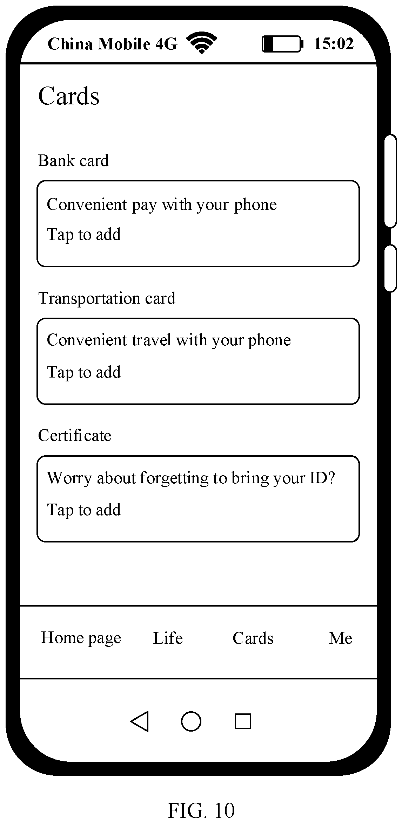

As shown in FIG. 10, on the "Cards" page, a corresponding smart card may be stored based on a category. For example, the category of the smart card may include "Bank card", "Transportation card", and "Certificate".

Assuming that the user needs to transfer a communications parameter of a Lingnan Pass transportation card to the smartwatch, the mobile phone may enter a transportation card storage interface in response to a tap operation performed by the user on the option "Transportation card".

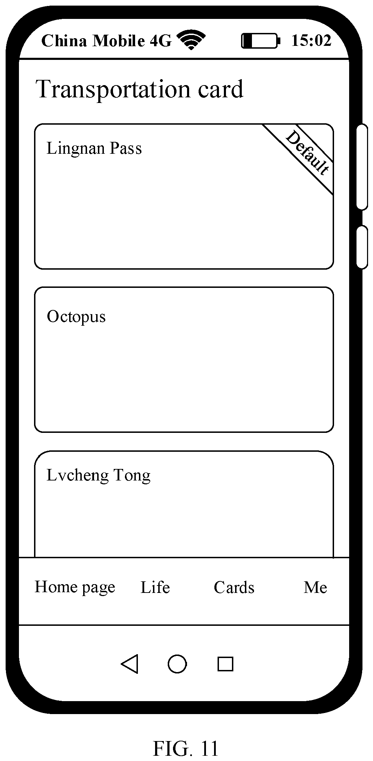

As shown in FIG. 11, a plurality of transportation cards may have been activated on the mobile phone, and the mobile phone may enter a Lingnan Pass transportation card interface in response to a tap operation performed by the user on the Lingnan Pass transportation card.

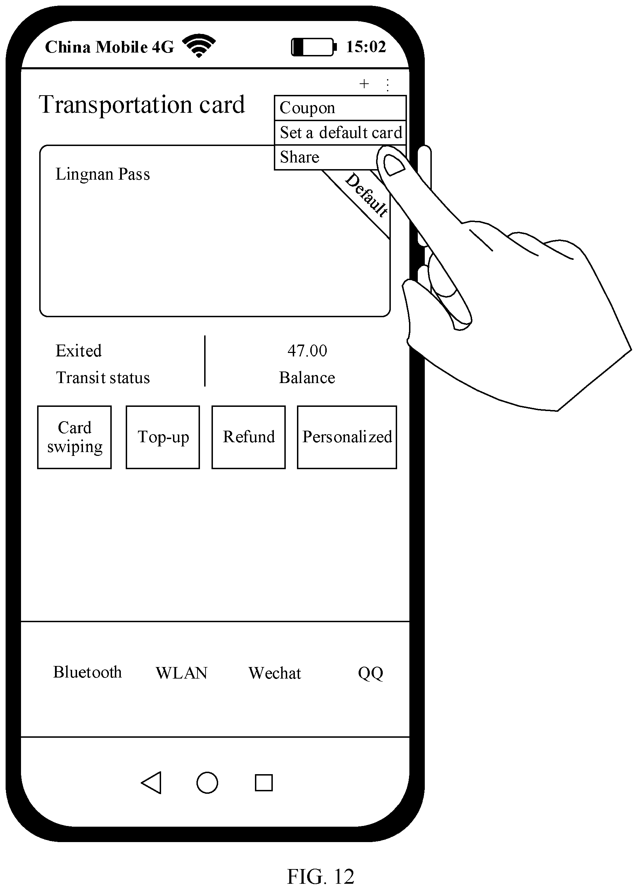

As shown in FIG. 12, after the mobile phone enters the Lingnan Pass transportation card interface, the mobile phone may pop up options "Coupon", "Set a default card", and "Share" in response to a tap operation performed by the user on a key in an upper right corner, and then the mobile phone may pop up a sharing selection bar at the bottom of the page in response to a tap operation performed by the user on the key "Share".

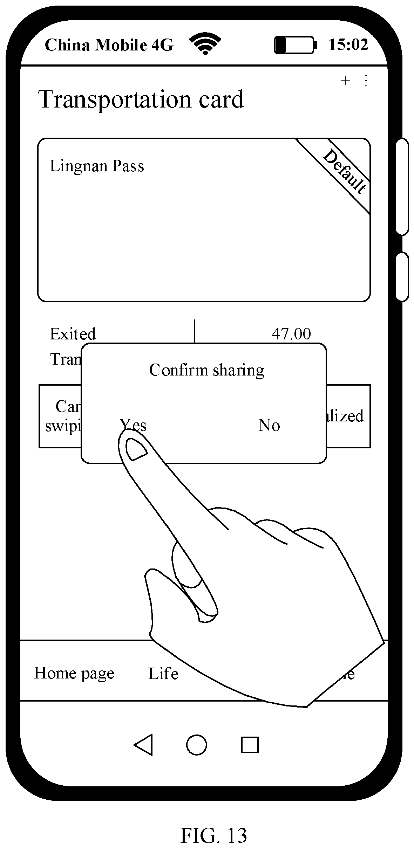

As shown in FIG. 13, the mobile phone may pop up a sharing prompt box in response to a tap operation performed by the user on an option "Bluetooth" in the sharing selection bar. When the mobile phone detects a tap operation performed by the user on a key "Yes" in the sharing prompt box, the mobile phone transfers the communications parameter of the Lingnan Pass transportation card to the smartwatch, or when the mobile phone detects a tap operation performed by the user on a key "No" in the sharing prompt box, the mobile phone cancels an operation of transferring the communications parameter of the Lingnan Pass transportation card to the smartwatch.

It should be noted that, although in the foregoing application scenario, the first electronic device 101 transfers the communications parameter of the smart card to the second electronic device 102 through the Bluetooth connection channel, in an actual application process, in addition to the Bluetooth connection channel, the first electronic device 101 may further transfer the communications parameter of the smart card through another type of wireless connection channel 104, for example, the first electronic device 101 may further transfer the communications parameter of the smart card on the first electronic device 101 to the second electronic device 102 through a Wi-Fi connection channel or a cellular network connection channel. A manner in which the first electronic device 101 transfers the communications parameter of the smart card to the second electronic device 102 is not limited in this application.

After the first electronic device 101 transfers the communications parameter of the smart card to the second electronic device 102, the second electronic device 102 may perform a card swiping operation of a corresponding smart card.

When the user performs a card swiping operation by using the second electronic device 102, the second electronic device 102 may enable a wireless communication function in response to an operation of the user, so that the wireless communications module 1023 of the second electronic device 102 establishes a wireless connection channel 104 with the wireless communications module 1013 of the first electronic device 101. In addition, the second electronic device 102 may further enable an NFC function in response to an operation of the user.

In an actual operation process, the second electronic device 102 may first enable a wireless communication function, and then enable an NFC function of the electronic device; or the second electronic device 102 may first enable an NFC function of the electronic device, and then enable a wireless communication function of the electronic device.

After the second electronic device 102 enables the NFC function, if the second electronic device 102 and the NFC card reader 103 are kept at a proper short-range distance (for example, 0 centimeters to 4 centimeters), the NFC chip 1022 of the second electronic device 102 may establish an NFC connection channel 105 with the NFC card reader 103.

Then, the NFC card reader 103 may send a first transaction request to the NFC chip 1022 of the second electronic device 102 through the NFC connection channel 105.

After receiving the first transaction request, the NFC chip 1022 transfers a first information request to the processor 1021, and the processor 1021 sends the first information request to the wireless communications module 1013 of the first electronic device 101 by using the wireless communications module 1023.

The first transaction request includes some or all of the shared communications parameters of the smart card. The first transaction request and the first information request may be a same request, or the first transaction request and the first information request may be different requests.

For example, after receiving the first transaction request, the second electronic device 102 directly forwards the first transaction request to the first electronic device 101. In this case, the first transaction request and the first information request are a same request. Alternatively, after receiving the first transaction request, the second electronic device 102 processes the first transaction request by using the processor 1021, for example, performs processing such as format conversion or communications parameter extraction, to obtain the first information request, and then sends the first information request to the first electronic device 101. In this case, the first transaction request and the first information request are different requests.

After receiving the first information request by using the wireless communications module 1013, the processor 1011 of the first electronic device 101 transfers the first information request to the NFC chip 1012 for processing.

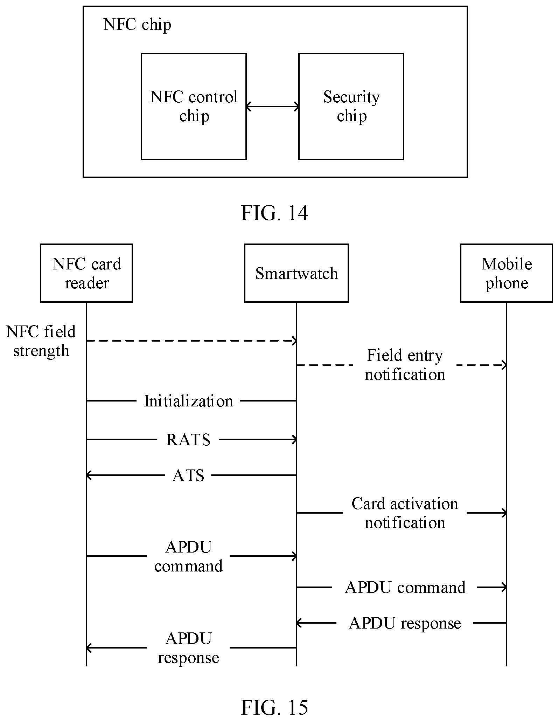

As shown in FIG. 14, the NFC chip 1012 may include an NFC controller chip and a security chip. The NFC controller chip is configured to control the NFC chip to establish an NFC connection channel 105 with another electronic device supporting an NFC function. The security chip is a trusted platform module, and is an apparatus that can independently perform key generation, encryption, and decryption. The NFC chip encapsulated with the security chip can implement various identity identification operations and payment operations, so that the NFC chip can simulate various smart cards on which identity authentication operations need to be performed and smart cards related to fund transactions, for example, a bank card and a bus card.

After obtaining a first information request, the processor 1011 may transfer the first information request to the security chip of the NFC chip 1012 for processing.

After processing the first information request, the security chip feeds back smart card response information (that is, the foregoing first response information) to the processor 1011.

After obtaining the smart card response information, the processor 1011 sends the smart card response information to the second electronic device 102 by using the wireless communications module 1013.

After receiving the smart card response information by using the wireless communications module 1023, the processor 1021 of the second electronic device 102 transfers the smart card response information to the NFC controller chip of the NFC chip 1022, and the NFC controller chip of the NFC chip 1022 sends the smart card response information to an NFC card reading device through the NFC connection channel 105, to complete a card swiping operation.

The following describes the foregoing card swiping process with reference to a specific application scenario.

### Application scenario 2:

In this scenario, it is assumed that a user carries the first electronic device 101 and the second electronic device 102, the first electronic device 101 is a mobile phone, and the second electronic device 102 is a smartwatch. The wireless communications module 1013 of the mobile phone includes a first Bluetooth module, the wireless communications module 1023 of the smartwatch includes a second Bluetooth module, and the mobile phone establishes a Bluetooth connection channel with the second Bluetooth module of the smartwatch by using the first Bluetooth module.

For example, a user intends to take a bus. When getting on the bus, the user carries things with both hands, and it is inconvenient to take out the mobile phone and scan a QR code for payment. In this case, the user pays by swiping a card on the smartwatch.

As shown in FIG. 15, the NFC card reader 103 generates NFC field strength when working. In a process in which the smartwatch approaches the NFC card reader 103, the smartwatch may detect NFC field strength within a proper short-range distance.

To save power, if an electronic device such as a mobile phone does not detect an operation of a user within preset duration, the electronic device enters a sleep state. Therefore, after the smartwatch detects that the NFC field strength is greater than a preset field strength threshold, the processor 1021 of the smartwatch may send a field entry notification to the mobile phone by using the second Bluetooth module, where the field entry notification is used to wake up the mobile phone and remind the mobile phone to cooperate with a subsequent card swiping operation.

When the processor 1011 of the mobile phone receives the field entry notification by using the first Bluetooth module, if the mobile phone is in the sleep state, the processor 1011 controls the mobile phone to exit the sleep state and enter a working state.

Then, the NFC chip 1022 of the smartwatch and the NFC card reader 103 may perform an initialization operation based on content specified in the ISO 14443-3 protocol, to establish an NFC connection channel 105.

After the NFC connection channel 105 is established, the NFC card reader 103 sends a request for answer to select (request for answer to select, RATS) instruction to the NFC chip 1022 of the smartwatch through the NFC connection channel 105.

After receiving the RATS instruction, the NFC chip 1022 of the smartwatch checks, according to the RATS instruction, whether a communications parameter of a corresponding bus card is set in the NFC chip 1022. If the communications parameter of the corresponding bus card is set in the NFC chip 1022 of the smartwatch, the smartwatch replies to the NFC card reader 103 with an ATS instruction through the NFC connection channel 105, and the processor 1021 of the smartwatch may further send a corresponding card activation notification to the first Bluetooth module of the mobile phone by using the second Bluetooth module.

After receiving the card activation notification by using the first Bluetooth module, the processor 1011 of the mobile phone prepares to perform a card swiping operation.

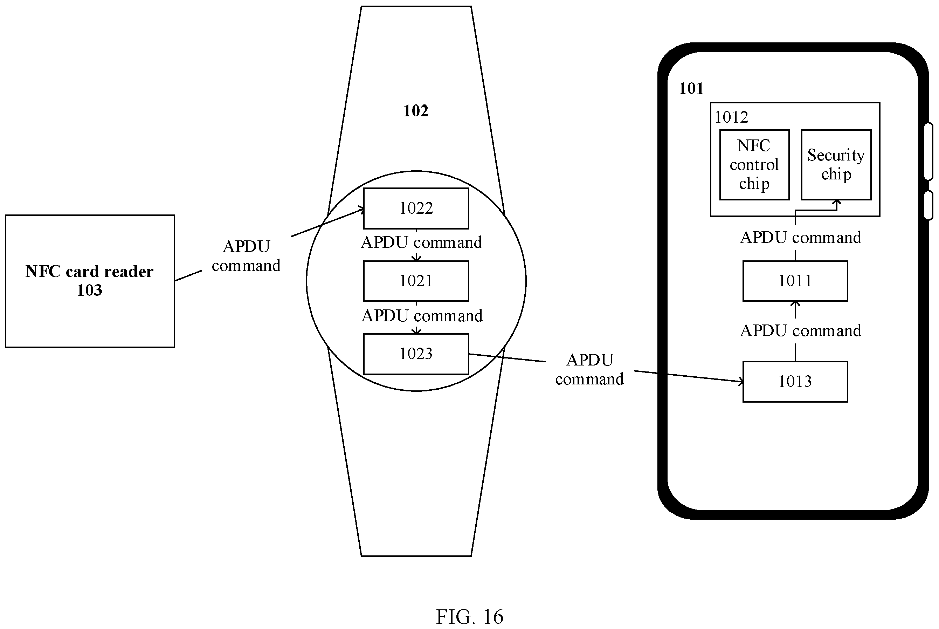

As shown in FIG. 16, after receiving the ATS instruction, the NFC card reader 103 sends a smart card interaction (application protocol data unit, APDU) command (that is, a first transaction request) to the NFC chip 1022 of the smartwatch through the NFC connection channel 105.

After receiving the APDU command, the NFC chip 1022 of the smartwatch transfers the APDU command to the processor 1021 through an I2C interface, and the processor 1022 transfers the APDU command to the first Bluetooth module of the mobile phone by using the second Bluetooth module.

After receiving the APDU command by using the first Bluetooth module, the processor 1011 of the mobile phone transfers the APDU command to the security chip of the NFC chip 1012 through an SPI.

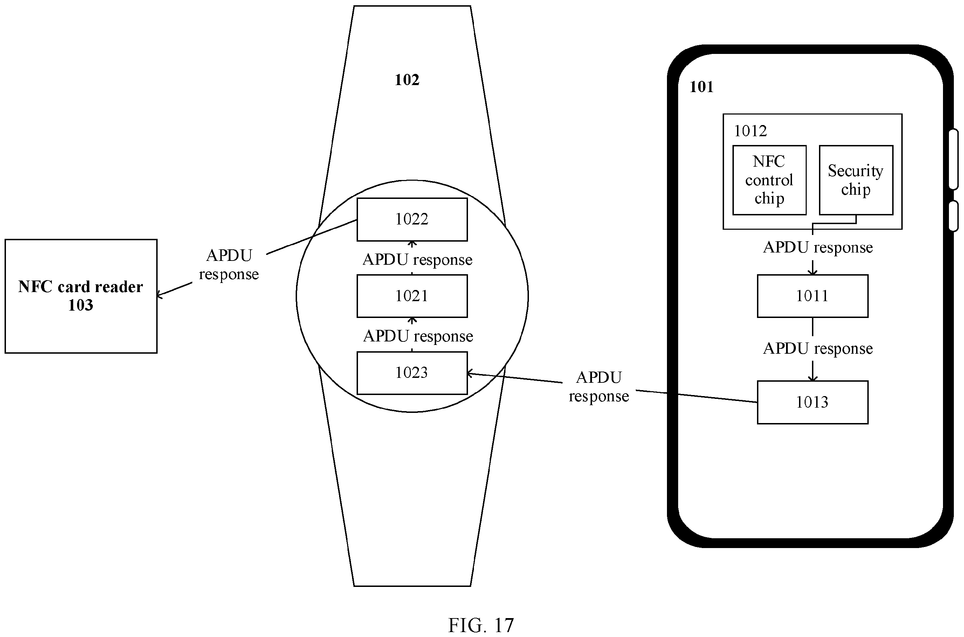

As shown in FIG. 17, the security chip of the NFC chip 1012 processes the APDU command to obtain an APDU response (that is, smart card response information), and transfers the APDU response to the processor 1011 of the mobile phone through an SPI.

The processor 1011 of the mobile phone transfers the APDU response to the second Bluetooth module of the smartwatch by using the first Bluetooth module.

After receiving the APDU response by using the second Bluetooth module, the processor 1021 of the smartwatch transfers the APDU response to the NFC chip 1022 through an I2C interface. The NFC chip 1022 sends the APDU response to the NFC card reader 103 through the NFC connection channel 105.

Therefore, the NFC card reader 103 and the smartwatch complete exchange of the APDU instruction once.

It may be understood that, in a card swiping process, the NFC card reader 103 and the smartwatch may need to exchange the APDU instruction for one or more times. When the NFC card reader 103 and the smartwatch need to exchange the APDU instruction for a plurality of times, the NFC card reader 103, the smartwatch, and the mobile phone may exchange the APDU instruction for a plurality of times with reference to the foregoing APDU instruction exchange processes shown in FIG. 15, FIG. 16, and FIG. 17.

A specific type of the Bluetooth module may be selected based on an actual situation. For example, the Bluetooth module may be a standard Bluetooth module, or the Bluetooth module may be a Bluetooth low energy (Bluetooth Low Energy, BLE) module. In addition, in an actual application, another communications module with a proper communication range may be selected to replace the Bluetooth module. For example, a Wi-Fi module may be used to replace the Bluetooth module.

### Application scenario 3:

In Application scenario 2, the wireless communications module 1013 and the wireless communications module 1023 are wireless communications modules at a short communication distance, such as Bluetooth modules or Wi-Fi modules. Therefore, the card swiping process shown in Application scenario 2 is applicable to a short-range card swiping scenario in which the user carries both the first electronic device 101 and the second electronic device 102.

However, in some other scenarios, the user may not carry both the first electronic device 101 and the second electronic device 102. For example, in a family, after the father activates an electronic bus card on a mobile phone of the father, the mobile phone transfers a communications parameter of the bus card to a smartwatch of a child in the foregoing smart card parameter configuration step. When the child performs a bus card swiping operation by using the smartwatch, the father is not necessarily around, that is, a space distance between the mobile phone of the father and the smartwatch of the child is long, and the smartwatch cannot establish a wireless connection channel 104 with the mobile phone by using wireless communications modules at a short communication distance, such as Bluetooth modules or Wi-Fi modules. Consequently, the smartwatch cannot implement the foregoing card swiping process.

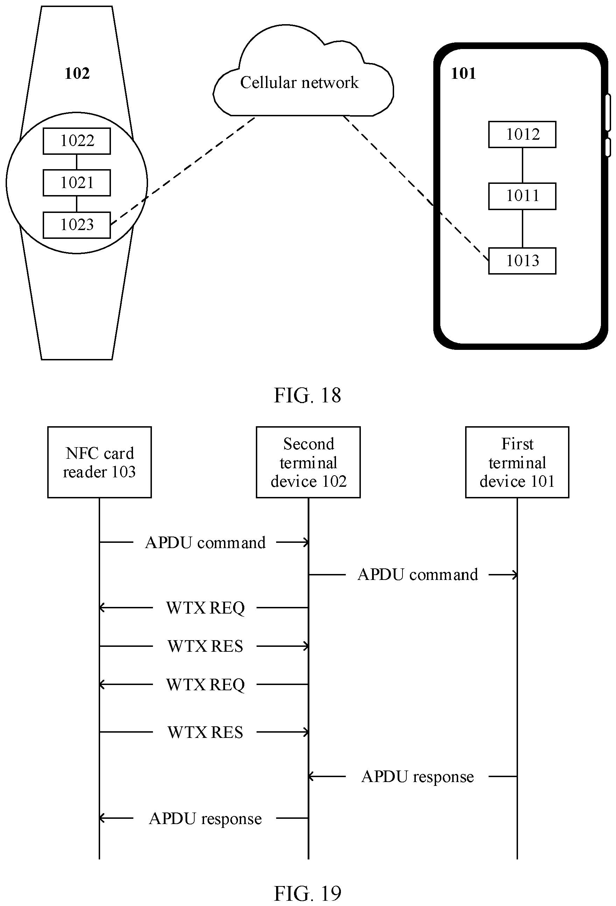

Therefore, in Application scenario 3, as shown in FIG. 18, the wireless communications module 1013 of the first electronic device 101 may include a first cellular network module, and the wireless communications module 1023 of the second electronic device 102 may include a second cellular network module. In this case, the first electronic device 101 and the second electronic device 102 may establish a cellular network connection channel by using the first cellular network module and the second cellular network module, and implement the foregoing card swiping process through the cellular network connection channel.

In this application scenario, it is assumed that the first electronic device 101 is a mobile phone of the father, the second electronic device 102 is a smartwatch of a child, and the smartwatch supports a cellular network.

When taking a bus alone, the child performs a card swiping payment operation by using the smartwatch.

The NFC card reader 103 generates NFC field strength when working. In a process in which the smartwatch approaches the NFC card reader 103, the smartwatch may detect NFC field strength within a proper short-range distance. If the smartwatch detects the NFC field strength and the NFC field strength is greater than a preset field strength threshold, the processor 1021 of the smartwatch sends a field entry notification to the mobile phone by using the second cellular network module, where the field entry notification is used to wake up the mobile phone and remind the mobile phone to cooperate with a subsequent card swiping operation.

When the processor 1011 of the mobile phone receives the field entry notification by using the first cellular network module, if the mobile phone is in a sleep state, the processor 1011 exits the sleep state and enters a working state.

Then, the NFC chip 1022 of the smartwatch and the NFC card reader 103 may perform an initialization operation based on content specified in the ISO 14443-3 protocol, to establish an NFC connection channel 105.

After the NFC connection channel 105 is established, the NFC card reader 103 sends a request for answer to select (request for answer to select, RATS) instruction to the smartwatch through the NFC connection channel 105.

After receiving the RATS instruction, the NFC chip 1022 of the smartwatch checks, according to the RATS instruction, whether a communications parameter of a corresponding bus card is set in the NFC chip 1022. If the communications parameter of the corresponding bus card is set in the NFC chip 1022 of the smartwatch, the smartwatch replies to the NFC card reader 103 with an ATS instruction through the NFC connection channel 105, and the processor 1021 of the smartwatch may further send a corresponding card activation notification to the first cellular network module of the mobile phone by using the second cellular network module.

After receiving the card activation notification by using the first cellular network module, the processor 1011 of the mobile phone prepares to perform a card swiping operation.

After receiving the ATS instruction, the NFC card reader 103 sends a smart card interaction (application protocol data unit, APDU) command (that is, a first transaction request) to the NFC chip 1022 of the smartwatch through the NFC connection channel 105.

After receiving the APDU command, the NFC chip 1022 of the smartwatch transfers the APDU command to the processor 1021, and the processor 1022 transfers the APDU command to the first cellular network module of the mobile phone by using the second cellular network module.

After receiving the APDU command by using the first cellular network module, the processor 1011 of the mobile phone transfers the APDU command to the security chip of the NFC chip 1012.

The security chip of the NFC chip 1012 processes the APDU command to obtain an APDU response (that is, smart card response information), and transfers the APDU response to the processor 1011 of the mobile phone. The processor 1011 of the mobile phone transfers the APDU response to the second cellular network module of the smartwatch by using the first cellular network module.

After receiving the APDU response by using the second cellular network module, the processor 1021 of the smartwatch transfers the APDU response to the NFC chip 1022. The NFC chip 1022 sends the APDU response to the NFC card reader 103 through the NFC connection channel 105.

Therefore, the NFC card reader 103 and the smartwatch complete exchange of the APDU instruction once.

It may be understood that, in a card swiping process, the NFC card reader 103 and the smartwatch may need to exchange the APDU instruction for one or more times. When the NFC card reader 103 and the smartwatch need to exchange the APDU instruction for a plurality of times, the NFC card reader 103, the smartwatch, and the mobile phone may exchange the APDU instruction for a plurality of times with reference to the foregoing APDU instruction exchange process.

It should be noted that a specific type of the cellular network module may be selected based on an actual situation. For example, the cellular network module may be a 2G cellular network module, a 3G cellular network module, a 4G cellular network module, a 5G cellular network module, or cellular network modules of more standards that may appear in the future. A specific type of the cellular network module is not limited in this application.

It can be learned from the examples in Application scenario 2 and Application scenario 3 that the second electronic device 102 does not locally process the first transaction request, but sends the first information request to the first electronic device 101 through the wireless connection channel 104 for processing, and then receives the smart card response information returned by the first electronic device 101.

Therefore, in a card swiping process, only after a long time period, the second electronic device 102 can receive the smart card response information returned by the first electronic device 101 and feed back the smart card response information to the NFC card reader 103.

Waiting duration of a preset time threshold may be set in the NFC card reader 103. A timer may be disposed on the NFC card reader 103, and a waiting time of the NFC card reader 103 is recorded by using a first timer. If the waiting time of the NFC card reader 103 exceeds the preset time threshold and the smart card response information is not received, the NFC card reader 103 disconnects the NFC connection channel 105 between the NFC card reader 103 and the second electronic device 102.

Therefore, in some possible implementations, the processor 1021 of the second electronic device 102 may start a second timer after receiving a first transaction request and sending a first information request to the first electronic device 101, where timing duration of the second timer is less than the preset time threshold.

If the processor 1021 receives, before the second timer expires, smart card response information sent by the first electronic device 101, the processor 1021 stops the second timer, and sends the smart card response information to the NFC card reader 103 to complete a card swiping operation.

If the processor 1021 does not receive, before the second timer expires, smart card response information sent by the first electronic device 101, the processor 1021 sends a waiting request to the NFC card reader 103 through the NFC connection channel 105.

After receiving the waiting request, the NFC card reader 103 prolongs waiting duration or refreshes the first timer, and recalculates waiting duration of the NFC card reader. Then, the NFC card reader 103 returns a waiting response to the second electronic device 102 through the NFC connection channel 105.

After receiving the waiting response by using the NFC chip 1022, the processor 1021 of the second electronic device 102 refreshes the second timer disposed on the processor 1021, and restarts timing.

If the second timer expires again, the second electronic device 102 may repeat the foregoing steps to repeatedly send the waiting request to the NFC card reader 103, to request the NFC card reader to continue waiting.

The following describes the expiration waiting function with reference to a specific application scenario.

### Application scenario 4:

It is assumed that a first timer is disposed on the NFC card reader 103, and timing duration of the first timer is 2s. If the first timer expires, the NFC card reader 103 disconnects the NFC connection channel 105 between the NFC card reader 103 and the second electronic device 102.

A second timer is disposed on the second electronic device 102, and timing duration of the second timer is 1.5s.

As shown in FIG. 19, after the NFC card reader 103 sends an APDU command to the second electronic device 102, the NFC card reader 103 starts a first timer, and the first timer starts timing.

After receiving the APDU command, the second electronic device 102 starts a second timer, and sends the APDU command to the first electronic device 101.

After 1.5s, if the second timer expires and an APDU response is not received, the second electronic device 102 sends a wait request (WTX REQ) to the NFC card reader 103.

After receiving WTX REQ, the NFC card reader 103 resets the first timer, so that the first timer restarts timing, and replies to the second electronic device 102 with a wait response (WTX RES).

After receiving WTX RES, the second electronic device 102 resets the second timer, so that the second timer restarts timing.

After 1.5s, if the second timer expires and the APDU response is still not received, the second electronic device 102 sends WTX REQ to the NFC card reader 103 again.

After receiving WTX REQ, the NFC card reader 103 resets the first timer again, so that the first timer restarts timing, and replies to the second electronic device 102 with WTX RES.

After receiving WTX RES, the second electronic device 102 resets the second timer, so that the second timer restarts timing.

After 1s, the first electronic device 101 sends an APDU response to the second electronic device 102.

After receiving the APDU response, the second electronic device 102 disables the second timer, and sends the APDU response to the NFC card reader 103.

After receiving the APDU response, the NFC card reader 103 disables the first timer, to complete current exchange of the APDU instruction.

In Application scenario 2, Application scenario 3, and Application scenario 4 described above, the first electronic device 101 and the second electronic device 102 establish the wireless connection channel 104, and the first electronic device 101 shares the communications parameter of the smart card with the second electronic device 102.

However, in some other application scenarios, the first electronic device 101 may fail to establish the wireless connection channel 104 with the second electronic device 102. In this case, the second electronic device 102 cannot use a smart card activated on the first electronic device 101.

Therefore, in some possible implementations, the user may also activate a smart card on the second electronic device 102.

When a user performs a card swiping operation by using the second electronic device 102, the processor 1021 of the second electronic device 102 may first check whether the wireless communications module 1023 establishes the wireless connection channel 104 with the wireless communications module 1013.

If the wireless communications module 1023 does not establish the wireless connection channel 104 with the wireless communications module 1013, the processor 1021 may indicate the NFC chip 1022 to invoke the locally activated smart card to perform a card swiping operation.

If the wireless communications module 1023 establishes the wireless connection channel 104 with the wireless communications module 1013, the processor 1021 may indicate the NFC chip 1022 to invoke the smart card activated on the first electronic device 101 to perform a card swiping operation.

Further, even if the wireless communications module 1013 of the first electronic device 101 establishes the wireless connection channel 104 with the wireless communications module 1023 of the second electronic device 102, the first electronic device 101 may not share the communications parameter of the smart card with the second electronic device 102 because the smart card is not activated or the like. In this case, the second electronic device 102 cannot use the smart card of the first electronic device 101 either.

Therefore, in some possible implementations, when the user performs a card swiping operation by using the second electronic device 102, the processor 1021 of the second electronic device 102 may first check whether the wireless communications module 1023 establishes the wireless connection channel 104 with the wireless communications module 1013, and detect whether the first electronic device 101 has shared the communications parameter of the smart card.

For example, a channel status parameter and a smart card status parameter may be set in the processor 1021 of the second electronic device 102.

The channel status parameter is used to record a status of the wireless connection channel 104. For example, the processor 1021 may use 1 and 0 to indicate whether the wireless communications module 1023 establishes the wireless connection channel 104 with the wireless communications module 1013. When the channel status parameter is 0, it indicates that the wireless connection channel 104 is not established. When the channel status parameter is 1, it indicates that the wireless connection channel 104 is established.

The smart card status parameter is used to record a status of the communications parameter of the smart card. For example, the processor 1021 may use 1 and 0 to indicate whether the first electronic device 101 shares the communications parameter of the smart card with the second electronic device 102. When the smart card status parameter is 0, it indicates that the first electronic device 101 does not share the communications parameter of the smart card with the second electronic device 102. When the channel status parameter is 1, it indicates that the first electronic device 101 has shared the communications parameter of the smart card with the second electronic device 102.

A terminal status of the second electronic device 102 may be determined based on the channel status parameter and the smart card status parameter. The processor 1021 indicates, based on the terminal status of the second electronic device 102, the NFC chip 1022 to perform a corresponding card swiping operation.

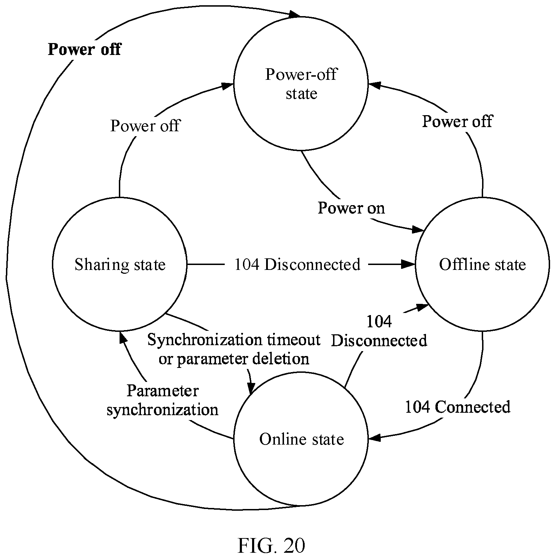

As shown in FIG. 20, a terminal status of the second electronic device 102 may mainly include a power-off state, an offline state, an online state, and a sharing state.

In the power-off state, the second electronic device 102 retains an NFC function, but the second electronic device 102 cannot establish the wireless connection channel 104 with the first electronic device 101. When the second electronic device 102 in the power-off state performs a card swiping operation, the NFC chip 1022 may detect whether a corresponding smart card is locally activated. If the corresponding smart card is activated on the second electronic device 102, the second electronic device 102 may perform a card swiping operation by using the locally activated smart card. If the corresponding smart card is not activated on the second electronic device 102, the second electronic device 102 cannot complete a corresponding card swiping operation, and therefore card swiping fails.

In the offline state, the second electronic device 102 is powered on, but does not establish the wireless connection channel 104 with the first electronic device 101. When the second electronic device 102 in the offline state performs a card swiping operation, the processor 1021 may indicate the NFC chip 1022 to detect whether a corresponding smart card is locally activated. If the corresponding smart card is activated on the second electronic device 102, the second electronic device 102 may perform a card swiping operation by using the locally activated smart card. If the corresponding smart card is not activated on the second electronic device 102, the second electronic device 102 cannot complete a corresponding card swiping operation, and therefore card swiping fails.

In the online state, the second electronic device 102 is powered on, and the second electronic device 102 establishes the wireless connection channel 104 with the first electronic device 101. However, because a smart card may not be activated on the first electronic device 101, or the first electronic device 101 may not share a communications parameter of the smart card of the first electronic device 101 to the second electronic device 102, or the like, the communications parameter of the smart card of the first electronic device 101 does not exist on the second electronic device 102. When the second electronic device 102 in the online state performs a card swiping operation, the processor 1021 may indicate the NFC chip 1022 to detect whether a corresponding smart card is locally activated. If the corresponding smart card is activated on the second electronic device 102, the second electronic device 102 may perform a card swiping operation by using the locally activated smart card. If the corresponding smart card is not activated on the second electronic device 102, the second electronic device 102 cannot complete a corresponding card swiping operation, and therefore card swiping fails.

In the sharing state, the second electronic device 102 is powered on, the second electronic device 102 establishes the wireless connection channel 104 with the first electronic device 101, and the first electronic device 101 shares the communications parameter of the smart card with the second electronic device 102. When the second electronic device 102 in the sharing state performs a card swiping operation, the processor 1021 may indicate the NFC chip 1022 to preferentially select a smart card shared by the first electronic device 101 to perform the card swiping operation. If the smart card shared by the first electronic device 101 matches, the NFC chip 1022 completes the card swiping operation based on the content described above. If the smart card shared by the first electronic device 101 does not match, the NFC chip 1022 selects a locally activated corresponding smart card to perform the card swiping operation. If a corresponding smart card is not activated on the second electronic device 102, the second electronic device 102 cannot complete a corresponding card swiping operation, and therefore card swiping fails.

In addition, the second electronic device 102 is not fixedly in a terminal state, and the terminal state of the second electronic device 102 may be switched based on an actual situation.

As shown in FIG. 20, when the second electronic device 102 is in a power-off state, the second electronic device 102 may start the device in response to a power-on operation of a user. In this case, a terminal status of the second electronic device 102 may be switched from the power-off state to an offline state after the second electronic device 102 is powered on.

When the second electronic device 102 establishes the wireless connection channel 104 with the first electronic device 101, the terminal status of the second electronic device 102 may be switched from the offline state to an online state.

In the online state, if the first electronic device 101 synchronizes a communications parameter of a smart card to the second electronic device 102, the terminal status of the second electronic device 102 is switched from the online state to a sharing state.

However, if the synchronization of the communications parameter fails when the first electronic device 101 synchronizes the communications parameter of the smart card to the second electronic device 102, or the second electronic device 102 deletes the communications parameter that is of the smart card and that is synchronized by the first electronic device 101, the terminal status of the second electronic device 102 is switched from the sharing state to the online state.

When the terminal status of the second electronic device 102 is the online state or the sharing state, once the wireless connection channel 104 is disconnected, the terminal status of the second electronic device 102 is switched to the offline state.

When the terminal status of the second electronic device 102 is the offline state, the online state, or the sharing state, the second electronic device 102 may turn off the device in response to a power-off operation of the user. In this case, the terminal status of the second electronic device 102 is switched to the power-off state.

The following describes card swiping procedures of the second electronic device 102 in different terminal states with reference to specific application scenarios.

In the following application scenarios, it may be assumed that the first electronic device 101 is a mobile phone, the second electronic device 102 is a smartwatch, the wireless communications module 1013 of the first electronic device 101 includes a first Bluetooth module, and the wireless communications module 1023 of the second electronic device 102 includes a second Bluetooth module.

Ch2_Status (that is, a channel status parameter) and Terminal_Status (that is, a smart card status parameter) are set in the processor 1021 of the second electronic device 102. When Ch2_Status=0, it indicates that no Bluetooth connection channel is established between the mobile phone and the smartwatch. When Ch2_Status=1, it indicates that a Bluetooth connection channel is established between the mobile phone and the smartwatch. When Terminal_Status=0, it indicates that the mobile phone does not share a communications parameter of a smart card with the smartwatch. When Terminal_Status=1, it indicates that the mobile phone has shared a communications parameter of a smart card with the smartwatch.

### Application scenario 5:

The smartwatch is in a power-off state. In this case, most functions on the smartwatch are unavailable, and only a few functions, such as an NFC function, are retained.

A user performs a card swiping operation on a bus by using the smartwatch. When the smartwatch detects NFC field strength and the NFC field strength is greater than a preset field strength threshold, the NFC chip 1022 of the smartwatch establishes an NFC connection channel 105 with the NFC card reader 103.

Then, the NFC card reader 103 sends an RATS instruction to the NFC chip 1022 of the smartwatch through the NFC connection channel 105.

The NFC chip 1022 of the smartwatch queries, according to the RATS instruction, whether a bus card is locally activated. If the NFC chip 1022 finds that the bus card is locally activated, the NFC chip 1022 replies to the NFC card reader 103 with an ATS instruction corresponding to the bus card.

After receiving the ATS instruction, the NFC card reader 103 enters an APDU instruction exchange process. The NFC card reader 103 sends an APDU command to the NFC chip 1022 through the NFC connection channel 105.

The NFC chip 1022 processes the APDU command in the security chip of the NFC chip 1022 to obtain an APDU response, and returns the APDU response to the NFC card reader 103 through the NFC connection channel 105, to complete exchange of the APDU instruction once.

When the APDU instruction needs to be exchanged only once in a card swiping process, the NFC chip 1022 and the NFC card reader 103 complete a bus card swiping operation.

When the APDU instruction needs to be exchanged for a plurality of times in a card swiping process, the NFC chip 1022 and the NFC card reader 103 repeat the foregoing APDU instruction exchange process to exchange the APDU instruction for a plurality of times, to complete a bus card swiping operation.

In addition, if the NFC chip 1022 finds that a bus card is not locally activated, the NFC chip 1022 fails to swipe the card.

### Application scenario 6:

The smartwatch is powered on, and a user performs a card swiping operation on a bus by using the smartwatch. When the smartwatch detects NFC field strength and the NFC field strength is greater than a preset field strength threshold, the NFC chip of the smartwatch establishes an NFC connection channel 105 with the NFC card reader 103.

Then, the NFC card reader 103 sends an RATS instruction to the NFC chip 1022 of the smartwatch through the NFC connection channel 105.

The NFC chip 1022 of the smartwatch sends a card swiping notification to the processor 1021. The processor 1021 queries Ch2_Status and Terminal_Status based on the card swiping notification.

If the processor 1021 of the smartwatch finds that Ch2_Status=0 and Terminal_Status=0 or 1, it indicates that the smartwatch is in an offline state. In this case, the processor 1021 notifies the NFC chip 1022 to perform a card swiping operation by using a local smart card.

After receiving the notification from the processor 1021, the NFC chip 1022 of the smartwatch queries, according to the RATS instruction, whether a bus card is locally activated. If the NFC chip 1022 finds that the bus card is locally activated, the NFC chip 1022 replies to the NFC card reader 103 with an ATS instruction corresponding to the bus card.

After receiving the ATS instruction, the NFC card reader 103 enters an APDU instruction exchange process. The NFC card reader 103 sends an APDU command to the NFC chip 1022 through the NFC connection channel 105.

The NFC chip 1022 processes the APDU command in the security chip of the NFC chip 1022 to obtain an APDU response, and returns the APDU response to the NFC card reader 103 through the NFC connection channel 105, to complete exchange of the APDU instruction once.

When the APDU instruction needs to be exchanged only once in a card swiping process, the NFC chip 1022 and the NFC card reader 103 complete a bus card swiping operation.

When the APDU instruction needs to be exchanged for a plurality of times in a card swiping process, the NFC chip 1022 and the NFC card reader 103 repeat the foregoing APDU instruction exchange process to exchange the APDU instruction for a plurality of times, to complete a bus card swiping operation.

In addition, if the NFC chip 1022 finds that a bus card is not locally activated, the NFC chip 1022 fails to swipe the card.

### Application scenario 7:

The smartwatch is powered on, and a user performs a card swiping operation on a bus by using the smartwatch. When the smartwatch detects NFC field strength and the NFC field strength is greater than a preset field strength threshold, the NFC chip of the smartwatch establishes an NFC connection channel 105 with the NFC card reader 103.

Then, the NFC card reader 103 sends an RATS instruction to the NFC chip 1022 of the smartwatch through the NFC connection channel 105.

The NFC chip 1022 of the smartwatch sends a card swiping notification to the processor 1021. The processor 1021 queries Ch2_Status and Terminal_Status based on the card swiping notification.

If the processor 1021 of the smartwatch finds that Ch2_Status=1 and Terminal_Status=0, it indicates that the smartwatch is in an online state. In this case, the processor 1021 notifies the NFC chip 1022 to perform a card swiping operation by using a local smart card.

After receiving the notification from the processor 1021, the NFC chip 1022 of the smartwatch queries, according to the RATS instruction, whether a bus card is locally activated. If the NFC chip 1022 finds that the bus card is locally activated, the NFC chip 1022 replies to the NFC card reader 103 with an ATS instruction corresponding to the bus card.

After receiving the ATS instruction, the NFC card reader 103 enters an APDU instruction exchange process. The NFC card reader 103 sends an APDU command to the NFC chip 1022 through the NFC connection channel 105.

The NFC chip 1022 processes the APDU command in the security chip of the NFC chip 1022 to obtain an APDU response, and returns the APDU response to the NFC card reader 103 through the NFC connection channel 105, to complete exchange of the APDU instruction once.

When the APDU instruction needs to be exchanged only once in a card swiping process, the NFC chip 1022 and the NFC card reader 103 complete a bus card swiping operation.

When the APDU instruction needs to be exchanged for a plurality of times in a card swiping process, the NFC chip 1022 and the NFC card reader 103 repeat the foregoing APDU instruction exchange process to exchange the APDU instruction for a plurality of times, to complete a bus card swiping operation.

In addition, if the NFC chip 1022 finds that a bus card is not locally activated, the NFC chip 1022 fails to swipe the card.

### Application scenario 8:

The smartwatch is powered on, and a user performs a card swiping operation on a bus by using the smartwatch. When the smartwatch detects NFC field strength and the NFC field strength is greater than a preset field strength threshold, the NFC chip of the smartwatch establishes an NFC connection channel 105 with the NFC card reader 103.

Then, the NFC card reader 103 sends an RATS instruction to the NFC chip 1022 of the smartwatch through the NFC connection channel 105.

The NFC chip 1022 of the smartwatch sends a card swiping notification to the processor 1021. The processor 1021 queries Ch2_Status and Terminal_Status based on the card swiping notification.

If the processor 1021 of the smartwatch finds that Ch2_Status=1 and Terminal_Status=1, it indicates that the smartwatch is in a sharing state. In this case, the processor 1021 notifies the NFC chip 1022 to preferentially use a smart card shared by the first electronic device 101 to perform a card swiping operation.

After receiving the notification from the processor 1021, the NFC chip 1022 of the smartwatch queries, according to the RATS instruction, whether a communications parameter of the smart card shared by the first electronic device 101 includes a communications parameter of a bus card.

If the communications parameter of the smart card shared by the first electronic device 101 includes the communications parameter of the bus card, the NFC chip 1022 replies to the NFC card reader 103 with an ATS instruction corresponding to the bus card, and completes a bus card swiping operation in the APDU instruction exchange manner described in Application scenario 2.

If the communications parameter of the smart card shared by the first electronic device 101 does not include the communications parameter of the bus card, the NFC chip of the smartwatch queries, according to the RATS instruction, whether the bus card is locally activated. If the NFC chip 1022 finds that the bus card is locally activated, the NFC chip 1022 replies to the NFC card reader 103 with an ATS instruction corresponding to the bus card.

After receiving the ATS instruction, the NFC card reader 103 enters an APDU instruction exchange process. The NFC card reader 103 sends an APDU command to the NFC chip 1022 through the NFC connection channel 105.

The NFC chip 1022 processes the APDU command in the security chip of the NFC chip 1022 to obtain an APDU response, and returns the APDU response to the NFC card reader 103 through the NFC connection channel 105, to complete exchange of the APDU instruction once.

When the APDU instruction needs to be exchanged only once in a card swiping process, the NFC chip 1022 and the NFC card reader 103 complete a bus card swiping operation.

When the APDU instruction needs to be exchanged for a plurality of times in a card swiping process, the NFC chip 1022 and the NFC card reader 103 repeat the foregoing APDU instruction exchange process to exchange the APDU instruction for a plurality of times, to complete a bus card swiping operation.

In addition, if the NFC chip 1022 finds that a bus card is not locally activated, the NFC chip 1022 fails to swipe the card.

### Application scenario 9:

In this application scenario, procedures of activating a smart card, sharing a smart card, and payment by card are described.

As shown in FIG. 8, the mobile phone may enter the wallet application in response to a tap operation performed by the user on the icon "Wallet".

As shown in FIG. 9, at least one page switching option, for example, "Home page", "Life", "Cards", and "Me", is set at the bottom of the home page of the wallet application.

The mobile phone may switch to a page of a smart card in response to a tap operation performed by the user on the option "Cards".

As shown in FIG. 10, on the "Cards" page, a corresponding smart card may be stored based on a category. For example, the category of the smart card may include "Bank card", "Transportation card", and "Certificate".

The mobile phone may enter a transportation card storage interface in response to a tap operation performed by the user on the option "Transportation card".

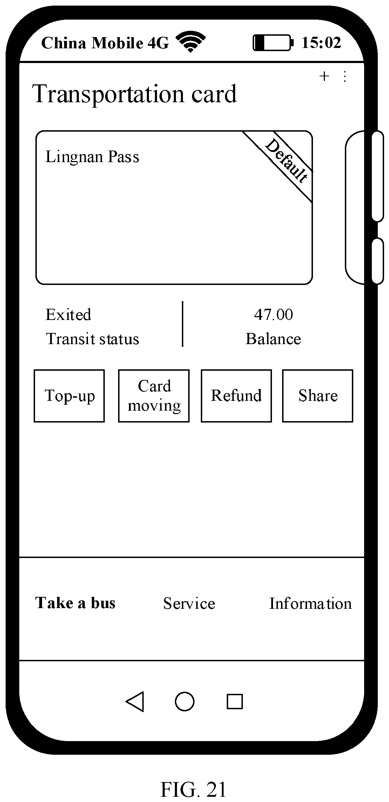

As shown in FIG. 21, a plurality of transportation cards may have been activated on the mobile phone.

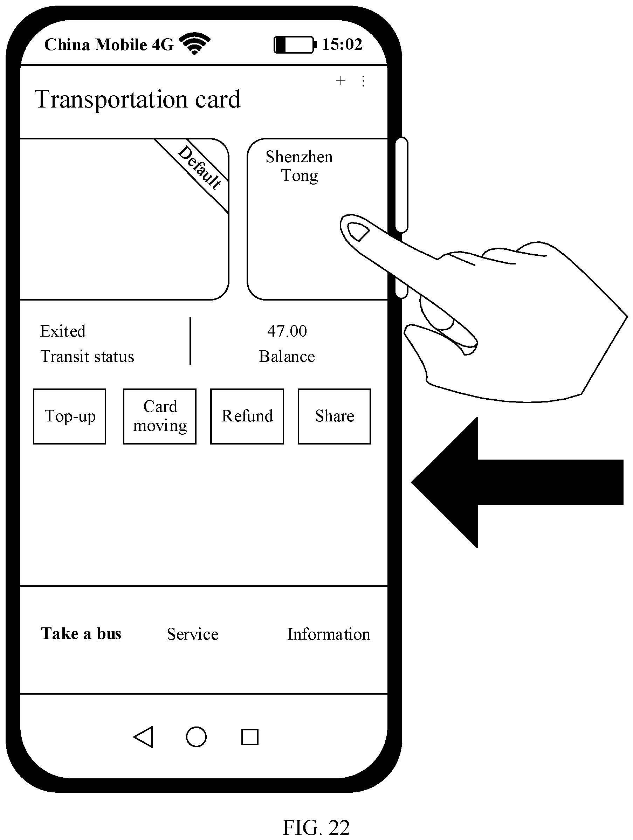

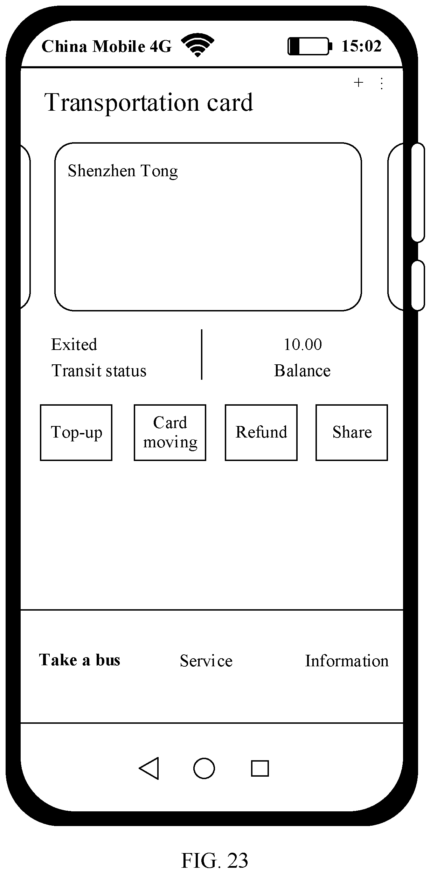

As shown in FIG. 22 and FIG. 23, the mobile phone may switch between display interfaces of different transportation cards in response to a left slide operation or a right slide operation of the user. For example, the mobile phone may switch from a Lingnan Pass transportation card interface to a Shenzhen Tong transportation card interface in response to the left slide operation of the user.

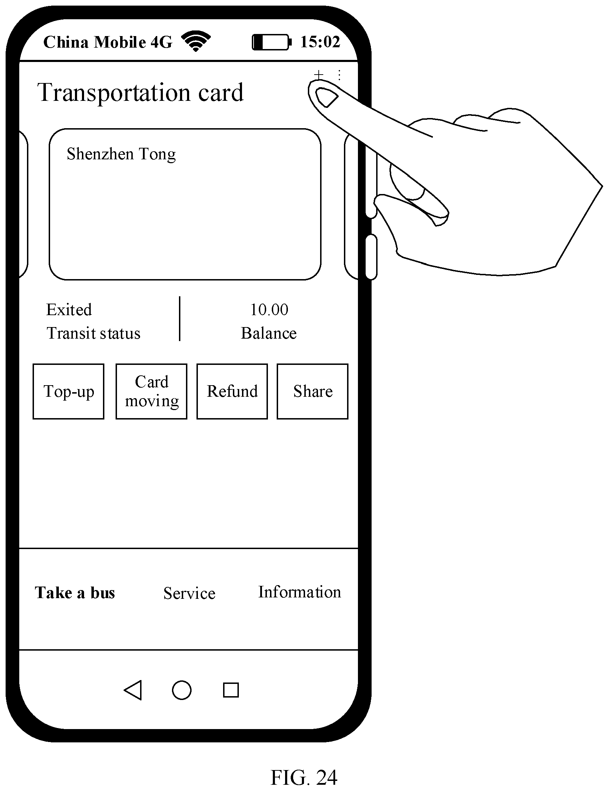

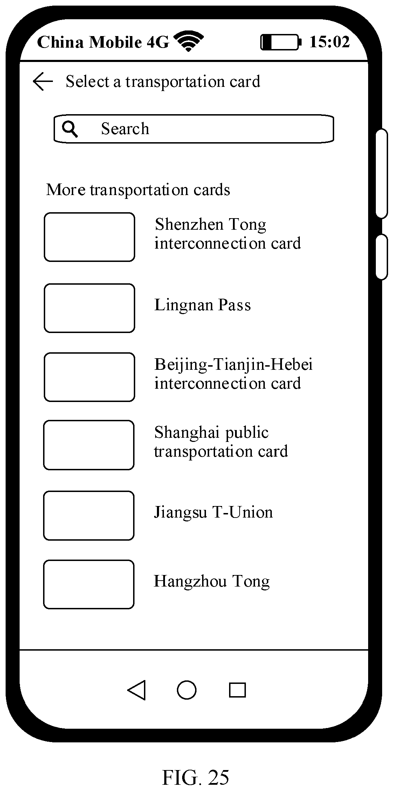

As shown in FIG. 24 and FIG. 25, assuming that the user expects to activate a new transportation card, the mobile phone may enter, in response to a tap operation performed by the user on an icon "+" in an upper right corner of the transportation card interface, an interface of a list of transportation cards that can be activated.

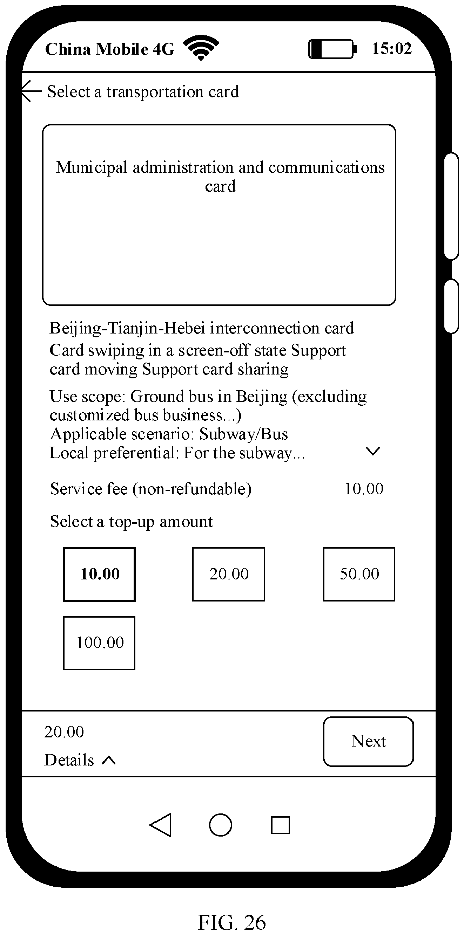

As shown in FIG. 26, assuming that the user expects to activate a Beijing-Tianjin-Hebei interconnection card, the mobile phone may enter an activation interface of the Beijing-Tianjin-Hebei interconnection card in response to a tap operation performed by the user on an option of the Beijing-Tianjin-Hebei interconnection card.

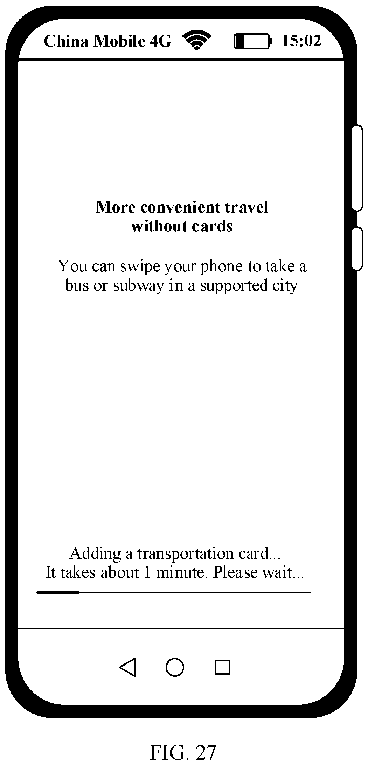

As shown in FIG. 27, the mobile phone may then enter a smart card loading interface in response to a tap operation performed by the user on an option "Next" and a payment operation.

After the smart card is loaded, the Beijing-Tianjin-Hebei interconnection card is successfully added.

It is assumed that the user expects to share a Lingnan Pass transportation card to the smartwatch. The mobile phone may enable a Bluetooth function in response to an operation of the user, to establish a Bluetooth connection channel with the smartwatch.

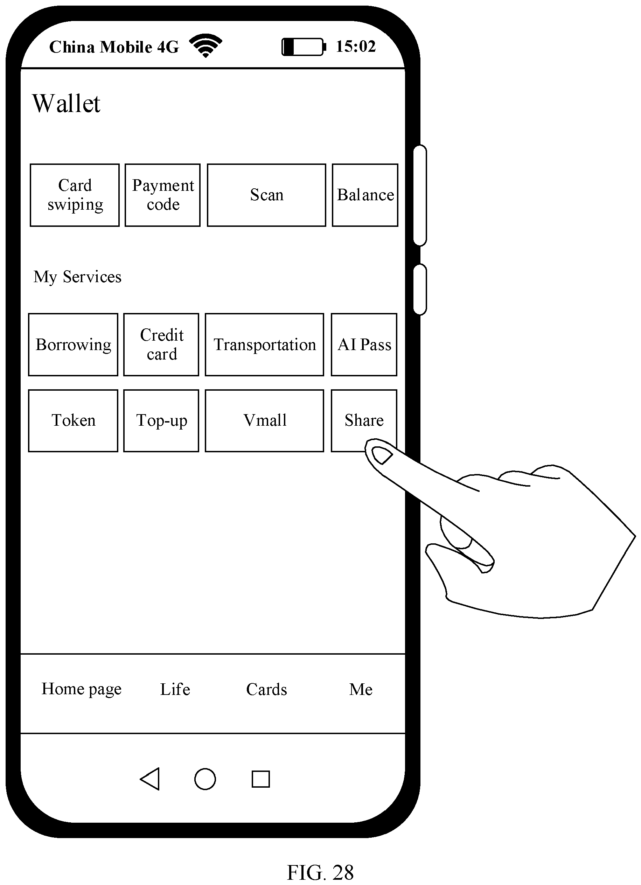

If the Lingnan Pass transportation card is a default card, it indicates that a smart card currently activated on the mobile phone is the Lingnan Pass transportation card. As shown in FIG. 28, in this case, the mobile phone may pop up a sharing selection bar at the bottom of a page in response to a tap operation performed by the user on an option "Share" on the home page of the wallet application.

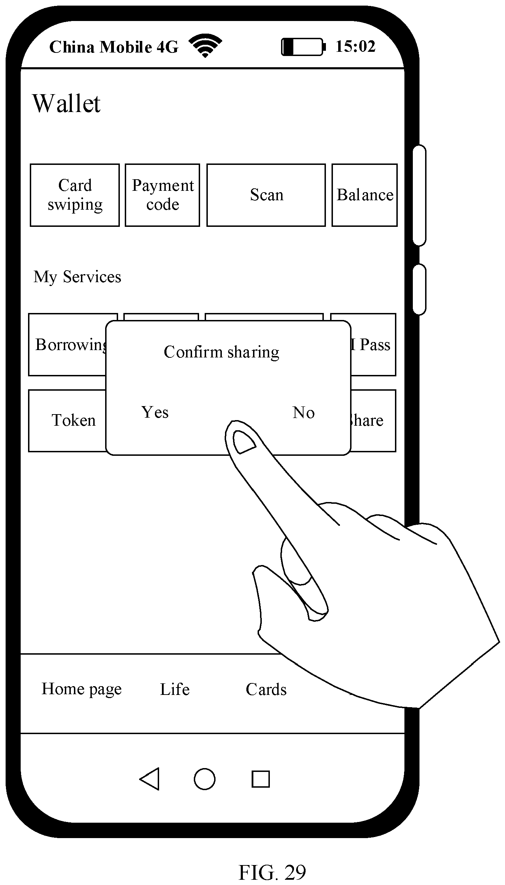

As shown in FIG. 29, the mobile phone may pop up a sharing prompt box in response to a tap operation performed by the user on an option "Bluetooth" in the sharing selection bar. When the mobile phone detects a tap operation performed by the user on a key "Yes" in the sharing prompt box, the mobile phone transfers a communications parameter of the currently activated smart card (that is, the Lingnan Pass transportation card) to the smartwatch, or when the mobile phone detects a tap operation performed by the user on a key "No" in the sharing prompt box, the mobile phone cancels an operation of transferring a communications parameter of the currently activated smart card (that is, the Lingnan Pass transportation card) to the smartwatch.

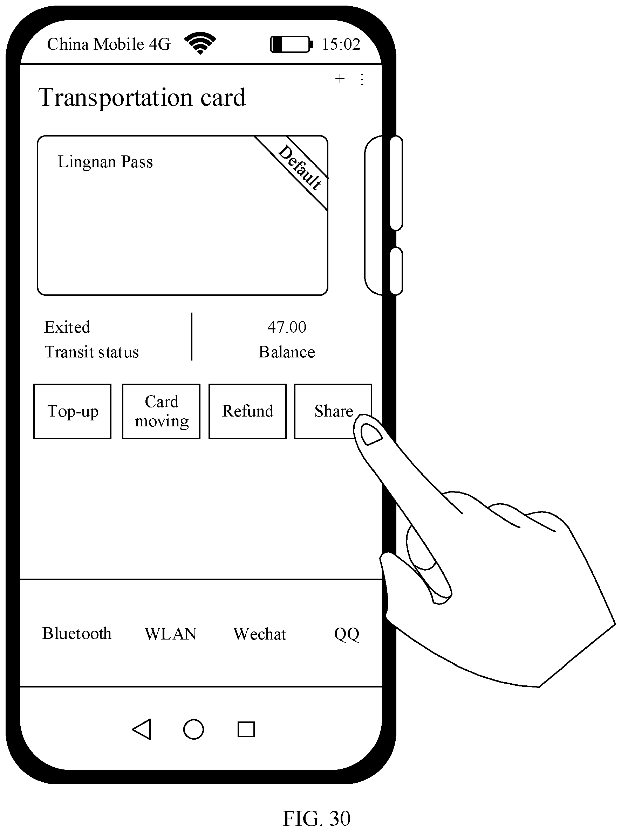

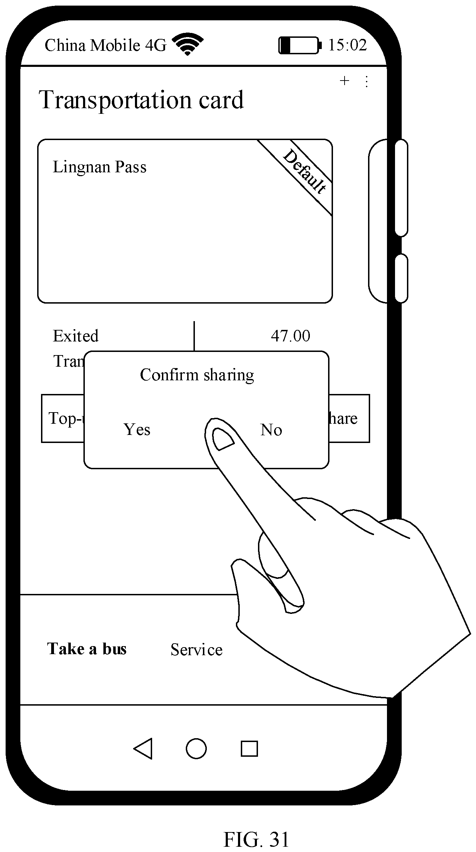

Alternatively, as shown in FIG. 30 and FIG. 31, the mobile phone may pop up a sharing prompt box in response to a tap operation performed by the user on an option "Share" on a display interface of the Lingnan Pass transportation card. When the mobile phone detects a tap operation performed by the user on a key "Yes" in the sharing prompt box, the mobile phone transfers a communications parameter of the currently activated smart card (that is, the Lingnan Pass transportation card) to the smartwatch, or when the mobile phone detects a tap operation performed by the user on a key "No" in the sharing prompt box, the mobile phone cancels an operation of transferring a communications parameter of the currently activated smart card (that is, the Lingnan Pass transportation card) to the smartwatch.

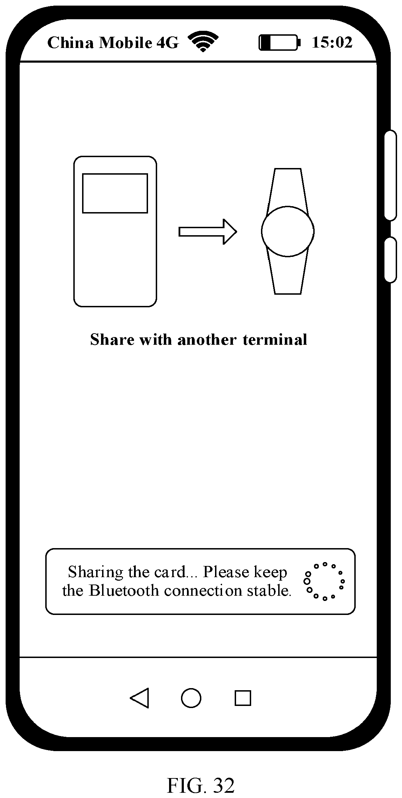

As shown in FIG. 32, the mobile phone transfers the communications parameter of the Lingnan Pass transportation card to the smartwatch in response to a tap operation performed by the user on the key "Yes" in the sharing prompt box.

The communications parameter includes one or more of parameters such as a unique identifier (unique identifier, UID) of an NFC card, an NFC answer to request-type A (answer to request-type A, ATQA), a select acknowledge (select acknowledge, SAK), and an answer to select (answer to select, ATS).

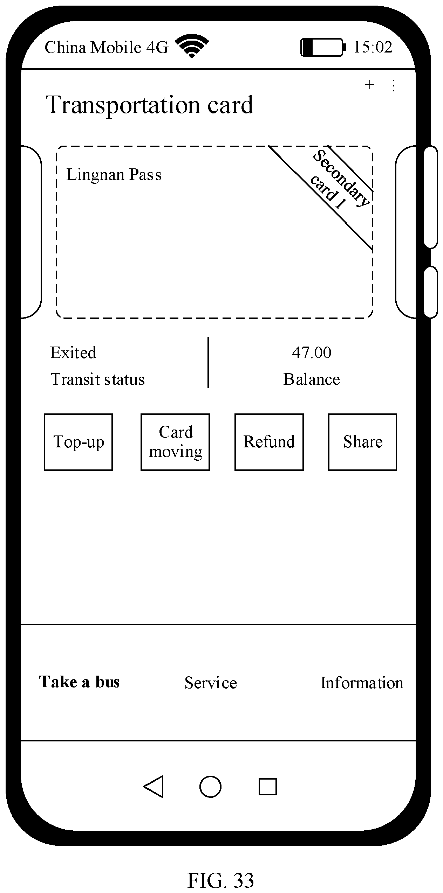

As shown in FIG. 33, after the mobile phone shares the communications parameter of the Lingnan Pass transportation card with the smartwatch, the mobile phone may create a secondary card of the Lingnan Pass transportation card, where the secondary card is a smart card shared with another electronic device.

A display form of the secondary card may be set based on an actual requirement. For example, a display card of the secondary card may be adjusted to a translucent state, to distinguish between a smart card activated on the mobile phone and a secondary card shared with another electronic device.

A scenario in which a user takes a bus is used as an example in a card swiping payment process.

Assuming that after the user gets on the bus, the mobile phone is placed in a pocket, and a Bluetooth connection channel is established between the mobile phone and the smartwatch, the user performs a card swiping operation by using the smartwatch.

In a process in which the smartwatch approaches the NFC card reader 103, the smartwatch may detect NFC field strength within a proper short-range distance.

After the smartwatch detects that the NFC field strength is greater than a preset field strength threshold, the processor 1021 of the smartwatch may send a field entry notification to the mobile phone by using the second Bluetooth module, where the field entry notification is used to wake up the mobile phone and remind the mobile phone to cooperate with a subsequent card swiping operation.

When the processor 1011 of the mobile phone receives the field entry notification by using the first Bluetooth module, if the mobile phone is in a sleep state, the processor 1011 controls the mobile phone to exit the sleep state and enter a working state.

Then, the NFC chip 1022 of the smartwatch and the NFC card reader 103 may perform an initialization operation based on content specified in the ISO 14443-3 protocol, to establish an NFC connection channel 105.

After the NFC connection channel 105 is established, the NFC card reader 103 sends a request for answer to select (request for answer to select, RATS) instruction to the NFC chip 1022 of the smartwatch through the NFC connection channel 105.

After the NFC chip 1022 of the smartwatch receives the RATS instruction, the NFC chip 1022 of the smartwatch sends a card swiping notification to the processor 1021. The processor 1021 queries Ch2_Status and Terminal_Status based on the card swiping notification.

If the processor 1021 of the smartwatch finds that Ch2_Status=1 and Terminal_Status=1, it indicates that the smartwatch is in a sharing state. In this case, the processor 1021 notifies the NFC chip 1022 to preferentially use a smart card shared by the first electronic device 101 to perform a card swiping operation.

After receiving the notification from the processor 1021, the NFC chip 1022 of the smartwatch checks, according to the RATS instruction, whether a communications parameter of a corresponding bus card is set in the NFC chip 1022. If the communications parameter of the corresponding bus card is set in the NFC chip 1022 of the smartwatch, the smartwatch replies to the NFC card reader 103 with an ATS instruction through the NFC connection channel 105, and the processor 1021 of the smartwatch may further send a corresponding card activation notification to the first Bluetooth module of the mobile phone by using the second Bluetooth module.

After receiving the card activation notification by using the first Bluetooth module, the processor 1011 of the mobile phone prepares to perform a card swiping operation.

As shown in FIG. 16, after receiving the ATS instruction, the NFC card reader 103 sends a smart card interaction (application protocol data unit, APDU) command to the NFC chip 1022 of the smartwatch through the NFC connection channel 105, and starts a first timer, where timing duration of the first timer is 2s. It is assumed that a start time of the first timer is the 0^{th} second.

After receiving the APDU command, the NFC chip 1022 of the smartwatch transfers the APDU command to the processor 1021 through an I2C interface, and the processor 1022 transfers the APDU command to the first Bluetooth module of the mobile phone by using the second Bluetooth module. In addition, the second electronic device 102 starts a second timer, where timing duration of the second timer is 1.5s.

After receiving the APDU command by using the first Bluetooth module, the processor 1011 of the mobile phone transfers the APDU command to the security chip of the NFC chip 1012 through an SPI.

As shown in FIG. 17, the security chip of the NFC chip 1012 processes the APDU command to obtain an APDU response (that is, smart card response information), and transfers the APDU response to the processor 1011 of the mobile phone through an SPI.

The processor 1011 of the mobile phone transfers the APDU response to the second Bluetooth module of the smartwatch at the 2^{nd} second by using the first Bluetooth module.

Because 2s is greater than 1.5s, at the 1.5^{th} second, if the second timer expires and the APDU response is not received, the second electronic device 102 sends a wait request (WTX REQ) to the NFC card reader 103.

After receiving WTX REQ, the NFC card reader 103 resets the first timer, so that the first timer restarts timing, and replies to the second electronic device 102 with a wait response (WTX RES).

After receiving WTX RES, the second electronic device 102 resets the second timer, so that the second timer restarts timing.

At the 2^{nd} second, after receiving the APDU response by using the second Bluetooth module, the processor 1021 of the smartwatch transfers the APDU response to the NFC chip 1022 through an I2C interface. The NFC chip 1022 sends the APDU response to the NFC card reader 103 through the NFC connection channel 105, and disables the second timer.

When receiving the APDU response, the NFC card reader 103 processes the APDU response, and disables the first timer.

Therefore, the NFC card reader 103 and the smartwatch complete exchange of the APDU instruction once.

It may be understood that, in a card swiping process, the NFC card reader 103 and the smartwatch may need to exchange the APDU instruction for one or more times. When the NFC card reader 103 and the smartwatch need to exchange the APDU instruction for a plurality of times, the NFC card reader 103, the smartwatch, and the mobile phone may exchange the APDU instruction for a plurality of times with reference to the foregoing APDU instruction exchange processes shown in FIG. 15, FIG. 16, and FIG. 17.

After card swiping is completed, the wallet application of the mobile phone 101 receives a transaction success notification sent by a remote server. In this case, the mobile phone may prompt, by vibrating or making an alert tone, the user with a fact that a new message is received, and turn on a screen to display the transaction success notification. Alternatively, the mobile phone may receive the transaction success notification, but does not perform a message prompt operation.

In addition, the processor 1011 of the mobile phone may further transfer the transaction success notification to the second Bluetooth module of the smartwatch by using the first Bluetooth module. After receiving the transaction success notification by using the second Bluetooth module, the processor 1021 of the smartwatch performs a corresponding message prompt operation.

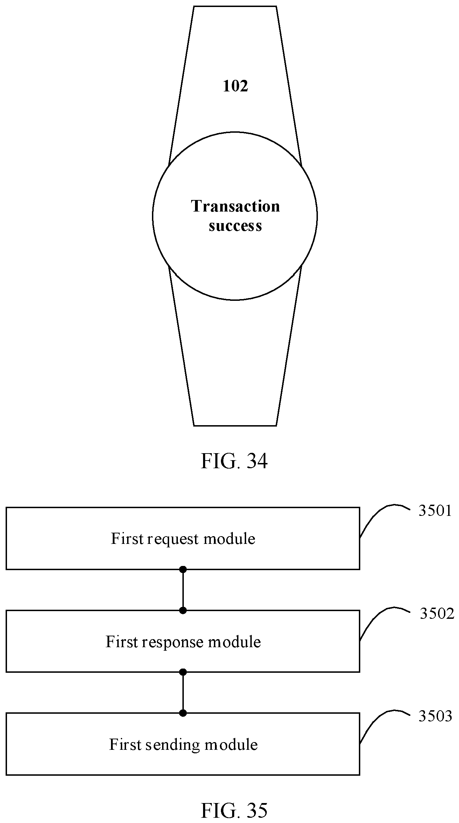

A form of the message prompt operation may be set based on an actual situation. For example, as shown in FIG. 34, the smartwatch 102 may prompt, by vibrating, the user with a fact that a new message is received, and turn on a screen to display "Transaction success".

In conclusion, in the smart card sharing method provided in embodiments of this application, when performing a card swiping operation, the second electronic device 102 may send, to the first electronic device 101 for processing, the first information request sent by the NFC card reader 103, and after the first electronic device 101 completes processing of the first information request, forward, to the NFC card reader 103, the smart card response information fed back by the first electronic device 101, to complete the card swiping operation.

When the second electronic device 102 uses the smart card shared by the first electronic device 101, a corresponding smart card does not need to be activated on the second electronic device 102. Therefore, the second electronic device 102 does not need to pay a corresponding card activation fee.

In addition, because the second electronic device 102 borrows only the smart card shared by the electronic device 101, and the smart card exists on the electronic device 101, even if the second electronic device 102 is lost, the smart card is not lost.

In addition, when the user uses a new electronic device, the first electronic device 101 may also share the smart card of the first electronic device 101 with the new electronic device in the foregoing smart card parameter configuration step, so that the smart card on the old electronic device is not idle because the new electronic device is used.

In addition, when the second electronic device 102 uses the smart card shared by the first electronic device 101, the first information request sent by the NFC card reader 103 is processed by the NFC chip 1012 of the first electronic device 101. Therefore, no security chip may be disposed in the NFC chip 1022 of the second electronic device 102. In the NFC chip, costs of the security chip account for approximately 70% of total costs of the entire NFC chip. Therefore, when no security chip is disposed in the NFC chip 1022, although the second electronic device 102 cannot independently support an NFC smart card function, costs of the NFC chip can be greatly reduced, and resource consumption can be reduced.

When the wireless communications module 1013 and the wireless communications module 1023 each include a cellular network module, even if the user does not carry both the first electronic device 101 and the second electronic device 102, the second electronic device 102 may remotely use, through a cellular network connection channel, the smart card shared by the first electronic device 101.

In addition, in some application scenarios, the second electronic device 102 may fail to establish a wireless connection channel with the first electronic device 101, and cannot use the smart card shared by the first electronic device 101. Therefore, the user may also activate some smart cards on the second electronic device 102 to cope with such a special application scenario. In this case, the second electronic device 102 may determine a terminal status of the second electronic device 102 based on a status of the wireless connection channel 104 and a status of the communications parameter of the smart card, and pertinently select, based on the terminal status, the smart card shared by the first electronic device 101 to perform a card swiping operation, or select a locally activated smart card to perform a card swiping operation.

It should be understood that sequence numbers of the steps do not mean execution sequences in the foregoing embodiments. The execution sequences of the processes should be determined based on functions and internal logic of the processes, and should not be construed as any limitation on the implementation processes of embodiments of this application.

Refer to FIG. 35. An embodiment of this application provides an electronic device. For ease of description, only a part related to this application is shown. As shown in FIG. 35, the electronic device includes:
a first request module 3501, configured to obtain a first information request sent by a second electronic device communicatively connected to the first electronic device, where the first information request is used to obtain transaction information of a first near field communication NFC virtual card;
a first response module 3502, configured to process the first information request to obtain first response information, where the first response information includes the transaction information of the first NFC virtual card; and
a first sending module 3503, configured to send the first response information to the second electronic device, to indicate the second electronic device to forward the first response information to an NFC card reader corresponding to the first information request.

Optionally, the electronic device further includes:
a sharing instruction module, configured to receive a first operation of a user; and
a parameter sharing module, configured to send a communications parameter of the first NFC virtual card to the second electronic device in response to the first operation.

Optionally, the first request module 3501 is specifically configured to obtain the first information request sent by the second electronic device through a wireless connection channel.

Optionally, the wireless connection channel is a Bluetooth connection channel or a Wi-Fi connection channel.

Optionally, the wireless connection channel is a cellular network connection channel.

Optionally, the electronic device further includes:
a completion notification module, configured to send a transaction completion notification to the second electronic device when receiving the transaction completion notification.

It should be noted that content such as information exchange between the foregoing apparatuses/units and the execution processes thereof is based on a same concept as the method embodiments of this application. For specific functions and technical effects of the content, refer to the method embodiments. Details are not described herein again.

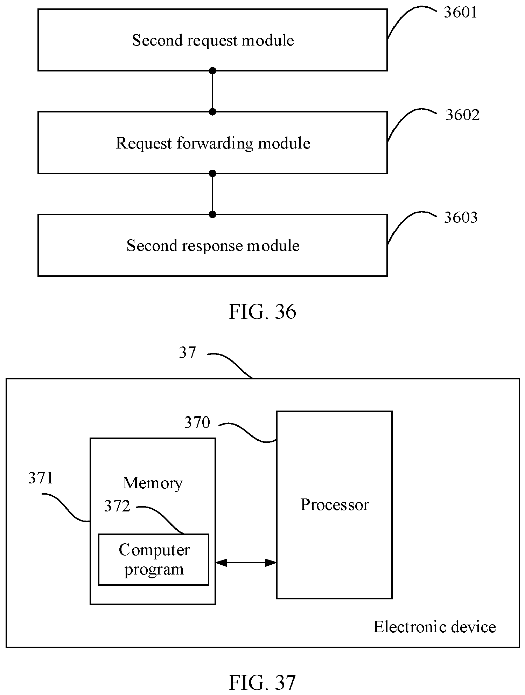

Refer to FIG. 36. An embodiment of this application provides an electronic device. For ease of description, only a part related to this application is shown. As shown in FIG. 36, the electronic device includes:
a second request module 3601, configured to obtain a first transaction request sent by a near field communication NFC card reader;
a request forwarding module 3602, configured to send a first information request to a first electronic device, where the first information request is used to obtain transaction information of a first NFC virtual card; and
a second response module 3603, configured to: obtain first response information returned by the first electronic device, and forward the first response information to the NFC card reader, where the first response information includes the transaction information of the first NFC virtual card.

Optionally, the electronic device further includes:
a parameter receiving module, configured to: receive and store a communications parameter that is of the first NFC virtual card and that is sent by the first electronic device.

Correspondingly, the second request module 3601 is specifically configured to obtain the first transaction request that is sent by the NFC card reader and that corresponds to the communications parameter.

Optionally, the second request module 3601 includes:
a channel submodule, configured to: when NFC field strength is detected and the NFC field strength is greater than a preset field strength threshold, establish an NFC connection channel with the NFC card reader corresponding to the NFC field strength; and
a request submodule, configured to obtain the first transaction request sent by the NFC card reader through the NFC connection channel.

Optionally, the electronic device further includes:
a timing starting module, configured to start a target timer;
a third request module, configured to send a wait request to the NFC card reader when the target timer expires and the first response information returned by the first electronic device is not received; and
a third response module, configured to restart the target timer when receiving a wait response returned by the NFC card reader.

Correspondingly, the second response module 3603 is specifically configured to: obtain the first response information returned by the first electronic device, forward the first response information to the NFC card reader, and disable the target timer.

Optionally, the request forwarding module 3602 is specifically configured to send the first information request to the first electronic device through a wireless connection channel.

Optionally, the wireless connection channel is a Bluetooth connection channel or a Wi-Fi connection channel.

Optionally, the wireless connection channel is a cellular network connection channel.

Optionally, the electronic device further includes:
a notification prompt module, configured to perform a preset prompt operation when receiving a transaction completion notification sent by the first electronic device.

Optionally, the notification prompt module is specifically configured to: vibrate and/or display preset text information when receiving the transaction completion notification sent by the first electronic device.

It should be noted that content such as information exchange between the foregoing apparatuses/units and the execution processes thereof is based on a same concept as the method embodiments of this application. For specific functions and technical effects of the content, refer to the method embodiments. Details are not described herein again.

Refer to FIG. 37. An embodiment of this application further provides an electronic device. As shown in FIG. 37, the electronic device 37 in this embodiment includes a processor 370, a memory 371, and a computer program 372 that is stored in the memory 371 and that can be run on the processor 370. When executing the computer program 372, the processor 370 implements the steps in the foregoing embodiment of the smart card sharing method.

For example, the computer program 372 may be divided into one or more modules/units. The one or more modules/units are stored in the memory 371, and are executed by the processor 370, to complete this application. The one or more modules/units may be a series of computer program instruction segments that can implement a specific function, and the instruction segment is used to describe an execution process of the computer program 372 in the electronic device 37.

The electronic device 37 may be a computing device such as a mobile phone, a desktop computer, a notebook computer, a palmtop computer, an intelligent wearable device, or a cloud server. The electronic device may include but is not limited to the processor 370 and the memory 371. A person skilled in the art may understand that FIG. 37 is merely an example of the electronic device 37, and does not constitute a limitation on the electronic device 37. The electronic device may include more or fewer components than those shown in the figure, or may combine some components, or may have different components. For example, the electronic device may further include an input/output device, a network access device, or a bus.

The processor 370 may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, a discrete hardware component, or the like. The general-purpose processor may be a microprocessor, or the processor may be any conventional processor or the like.

The memory 371 may be an internal storage unit of the electronic device 37, for example, a hard disk or memory of the electronic device 37. The memory 371 may alternatively be an external storage device of the electronic device 37, for example, a plug-in hard disk, a smart media card (Smart Media Card, SMC), a secure digital (Secure Digital, SD) card, or a flash card (Flash Card) that is disposed on the electronic device 37. Further, the memory 371 may include both an internal storage unit and an external storage device of the electronic device 37. The memory 371 is configured to store the computer program and other programs and data required by the electronic device. The memory 371 may be further configured to temporarily store data that has been output or is to be output.

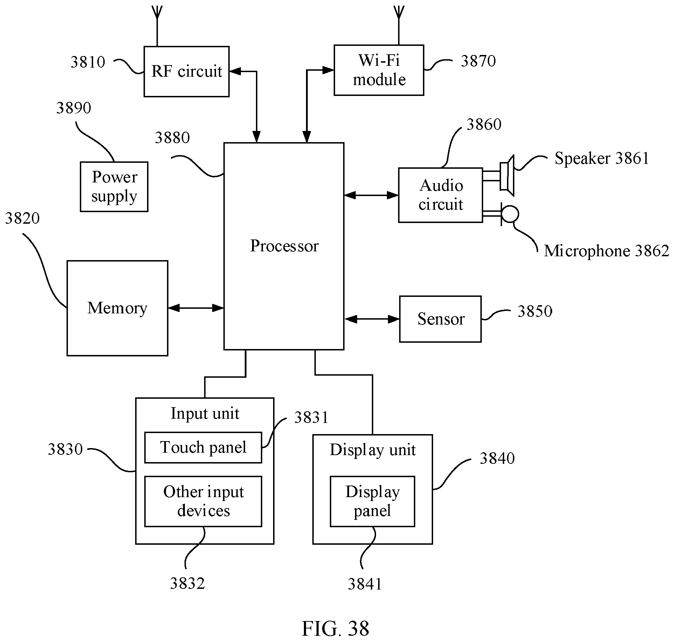

As described above, the electronic device may be a computing device such as a mobile phone, a desktop computer, a notebook computer, a palmtop computer, an intelligent wearable device, or a cloud server. A mobile phone is used as an example. FIG. 38 is a block diagram of a partial structure of a mobile phone according to an embodiment of this application. Refer to FIG. 38. The mobile phone includes components such as a radio frequency (Radio Frequency, RF) circuit 3810, a memory 3820, an input unit 3830, a display unit 3840, a sensor 3850, an audio circuit 3860, a wireless fidelity (wireless fidelity, Wi-Fi) module 3870, a processor 3880, and a power supply 3890. A person skilled in the art may understand that the structure of the mobile phone shown in FIG. 38 does not constitute a limitation on the mobile phone. The mobile phone may include more or fewer components than those shown in the figure, or may combine some components, or may have different component arrangements.

The following describes the constituent components of the mobile phone in detail with reference to FIG. 38.

The RF circuit 3810 may be configured to: receive and send a signal in an information receiving or sending process or a call process. Particularly, after receiving downlink information from a base station, the RF circuit sends the downlink information to the processor 3880 for processing, and sends related uplink data to the base station. Usually, the RF circuit includes but is not limited to an antenna, at least one amplifier, a transceiver, a coupler, a low noise amplifier (Low Noise Amplifier, LNA), a duplexer, and the like. In addition, the RF circuit 3810 may further communicate with a network and another device through wireless communication. The foregoing wireless communication may be any communications standard or protocol, which includes but is not limited to a global system for mobile communications (Global System for Mobile communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

The memory 3820 may be configured to store a software program and a module. The processor 3880 performs various function applications of the mobile phone and data processing by running the software program and the module that are stored in the memory 3820. The memory 3820 may mainly include a program storage area and a data storage area. The program storage area may store an operating system, an application required by at least one function (such as a sound playback function or an image playback function), and the like. The data storage area may store data (such as audio data or an address book) created based on use of the mobile phone, and the like. In addition, the memory 3820 may include a high-speed random access memory, or may include a nonvolatile memory, such as at least one magnetic disk storage device, a flash storage device, or another volatile solid-state storage device.

The input unit 3830 may be configured to: receive entered number or character information, and generate key signal input related to a user setting and function control of the mobile phone. Specifically, the input unit 3830 may include a touch panel 3831 and other input devices 3832. The touch panel 3831, also referred to as a touchscreen, may collect a touch operation (for example, an operation performed by a user on the touch panel 3831 or near the touch panel 3831 by using any proper object or accessory such as a finger or a stylus) performed by the user on or near the touch panel 3831, and drive a corresponding connection apparatus based on a preset program. Optionally, the touch panel 3831 may include two parts: a touch detection apparatus and a touch controller. The touch detection apparatus detects a touch orientation of the user, detects a signal generated by the touch operation, and transfers the signal to the touch controller. The touch controller receives touch information from the touch detection apparatus, converts the touch information into contact coordinates, then sends the contact coordinates to the processor 3880, and can receive a command sent from the processor 3880 and execute the command. In addition, the touch panel 3831 may be implemented by using a plurality of types, such as a resistive type, a capacitive type, an infrared type, and a surface acoustic wave type. In addition to the touch panel 3831, the input unit 3830 may further include the other input devices 3832. Specifically, the other input devices 3832 may include but are not limited to one or more of a physical keyboard, a function key (such as a volume control key or an on/off key), a trackball, a mouse, and a joystick.

The display unit 3840 may be configured to display information entered by the user or information provided for the user, and various menus of the mobile phone. The display unit 3840 may include a display panel 3841. Optionally, the display panel 3841 may be configured in a form of a liquid crystal display (Liquid Crystal Display, LCD), an organic light-emitting diode (Organic Light-Emitting Diode, OLED), or the like. Further, the touch panel 3831 may cover the display panel 3841. When detecting the touch operation on or near the touch panel 3831, the touch panel 3831 transfers the touch operation to the processor 3880 to determine a type of a touch event, and then the processor 3880 provides a corresponding visual output on the display panel 3841 based on the type of the touch event. Although the touch panel 3831 and the display panel 3841 are used as two independent components in FIG. 38 to implement input and input functions of the mobile phone, in some embodiments, the touch panel 3831 and the display panel 3841 may be integrated to implement the input and output functions of the mobile phone.

The mobile phone may further include at least one sensor 3850, for example, a light sensor, a motion sensor, and another sensor. Specifically, the light sensor may include an ambient light sensor and a proximity sensor. The ambient light sensor may adjust luminance of the display panel 3841 based on brightness of ambient light. The proximity sensor may turn off the display panel 3841 and/or backlight when the mobile phone moves to an ear. As a type of motion sensor, an accelerometer sensor may detect values of acceleration in all directions (usually on three axes), may detect a value and a direction of gravity when the mobile phone is still, and may be used in an application for identifying a mobile phone posture (such as switching between a landscape mode and a portrait mode, a related game, or magnetometer posture calibration), a function related to vibration identification (such as a pedometer or a knock), or the like. Another sensor such as a gyroscope, a barometer, a hygrometer, a thermometer, or an infrared sensor may be further configured in the mobile phone. Details are not described herein.

The audio circuit 3860, a speaker 3861, and a microphone 3862 may provide an audio interface between the user and the mobile phone. The audio circuit 3860 may convert received audio data into an electrical signal and then transmit the electrical signal to the speaker 3861, and the speaker 3861 converts the electrical signal into a sound signal for output. In addition, the microphone 3862 converts a collected sound signal into an electrical signal. The audio circuit 3860 receives the electrical signal, converts the electrical signal into audio data, and then outputs the audio data to the processor 3880 for processing, to send, through the RF circuit 3810, the audio data to, for example, another mobile phone, or outputs the audio data to the memory 3820 for further processing.

Wi-Fi is a short-range wireless transmission technology. The mobile phone may help, by using the Wi-Fi module 3870, the user receive and send an email, browse a web page, access streaming media, and the like. The Wi-Fi module 3870 provides wireless broadband internet access for the user. Although FIG. 38 shows the Wi-Fi module 3870, it may be understood that the Wi-Fi module 3870 is not a mandatory component of the mobile phone, and may be omitted based on a requirement without changing the essence of this application.

The processor 3880 is a control center of the mobile phone, is connected to all parts of the entire mobile phone by using various interfaces and lines, and performs various functions of the mobile phone and data processing by running or executing the software program and/or the module that are/is stored in the memory 3820 and invoking data stored in the memory 3820, to perform overall monitoring on the mobile phone. Optionally, the processor 3880 may include one or more processing units. Preferably, an application processor and a modem processor may be integrated into the processor 3880. The application processor mainly processes an operating system, a user interface, an application, and the like. The modem processor mainly processes wireless communication. It should be understood that the modem processor may not be integrated into the processor 3880.

The mobile phone further includes the power supply 3890 (for example, a battery) supplying power to all parts. Preferably, the power supply may be logically connected to the processor 3880 by using a power management system, to implement functions such as charging management, discharging management, and power consumption management by using the power management system.

Although not shown in the figure, the mobile phone may further include a camera. Optionally, the camera on the mobile phone may be front-facing or rear-facing. This is not limited in this embodiment of this application.

Optionally, the mobile phone may include a single camera, two cameras, three cameras, or the like. This is not limited in this embodiment of this application.

For example, the mobile phone may include three cameras, where one is a primary camera, one is a wide-angle camera, and one is a long-focus camera.

Optionally, when the mobile phone includes a plurality of cameras, the plurality of cameras may be all front-facing, or all rear-facing, or partially front-facing and partially rear-facing. This is not limited in this embodiment of this application.

In addition, although not shown in the figure, the mobile phone may further include a Bluetooth module and the like. Details are not described herein.

It may be clearly understood by a person skilled in the art that, for convenient and brief description, division into the foregoing functional units and modules is merely used as an example for description. In actual application, the foregoing functions can be allocated to different functional units and modules for implementation based on a requirement, that is, an inner structure of the apparatus is divided into different functional units or modules to implement all or some of the functions described above. Functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely provided for distinguishing between the units or modules, but are not intended to limit the protection scope of this application. For a specific working process of the units or modules in the foregoing system, refer to a corresponding process in the foregoing method embodiments. Details are not described herein again.

In the foregoing embodiments, descriptions of all embodiments have respective focuses. For a part that is not described in detail or recorded in an embodiment, refer to related descriptions in other embodiments.

A person of ordinary skill in the art may be aware that, units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated module/unit is implemented in a form of a software functional unit and sold or used as an independent product, the integrated module/unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the foregoing method embodiments can be implemented. The computer program includes computer program code. The computer program code may be in a source code form, an object code form, an executable file form, some intermediate forms, or the like. The computer-readable medium may include any entity or apparatus that can carry the computer program code, a recording medium, a USB flash drive, a removable hard disk, a magnetic disk, a compact disc, a computer memory, a read-only memory (ROM, Read-Only Memory), a random access memory (RAM, Random Access Memory), an electrical carrier signal, a telecommunication signal, a software distribution medium, and the like. It should be noted that content included in the computer-readable medium may be appropriately added or deleted based on requirements of legislation and patent practice in a jurisdiction. For example, in some jurisdictions, according to legislation and patent practice, the computer-readable medium does not include the electrical carrier signal or the telecommunication signal.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A smart card sharing system, comprising a first electronic device and a second electronic device, wherein the first electronic device and the second electronic device establish a communication connection;
the first electronic device has a first near field communication NFC virtual card;
the first electronic device is configured to:
receive a first operation of a user; and
send a communications parameter of the first NFC virtual card to the second electronic device in response to the first operation;
the second electronic device is configured to:
receive and store the communications parameter; and
send a first information request to the first electronic device when receiving a first transaction request that is sent by an NFC card reader and that corresponds to the communications parameter, wherein the first information request is used to obtain transaction information of the first NFC virtual card; and
the first electronic device is further configured to:
receive the first information request, and send first response information to the second electronic device, so that the second electronic device completes a transaction with the NFC card reader, wherein the first response information comprises the transaction information of the first NFC virtual card.

2. The smart card sharing system according to claim 1, wherein the first electronic device is communicatively connected to the second electronic device through a Bluetooth connection channel or a Wi-Fi connection channel.

3. The smart card sharing system according to claim 1, wherein the first electronic device is communicatively connected to the second electronic device through a cellular network connection channel.

4. The smart card sharing system according to claim 1, wherein the first electronic device is further configured to:
send a transaction completion notification to the second electronic device when receiving the transaction completion notification; and
the second electronic device is further configured to:
perform a preset prompt operation when receiving the transaction completion notification.

5. The smart card sharing system according to claim 4, wherein the preset prompt operation comprises vibrating and/or displaying preset text information.

6. A smart card sharing method, applied to a first electronic device, wherein the method comprises:
obtaining a first information request sent by a second electronic device communicatively connected to the first electronic device, wherein the first information request is used to obtain transaction information of a first near field communication NFC virtual card;
processing the first information request to obtain first response information, wherein the first response information comprises the transaction information of the first NFC virtual card; and
sending the first response information to the second electronic device, to indicate the second electronic device to forward the first response information to an NFC card reader corresponding to the first information request.

7. The smart card sharing method according to claim 6, wherein before the obtaining a first information request sent by a second electronic device communicatively connected to the first electronic device, the method comprises:
receiving a first operation of a user; and
sending a communications parameter of the first NFC virtual card to the second electronic device in response to the first operation.

8. The smart card sharing method according to claim 6, wherein the obtaining a first information request sent by a second electronic device communicatively connected to the first electronic device comprises:
obtaining the first information request sent by the second electronic device through a wireless connection channel.

9. The smart card sharing method according to claim 8, wherein the wireless connection channel is a Bluetooth connection channel or a Wi-Fi connection channel.

10. The smart card sharing method according to claim 8, wherein the wireless connection channel is a cellular network connection channel.

11. The smart card sharing method according to claim 6, wherein after the sending the first response information to the second electronic device, the method further comprises:
sending a transaction completion notification to the second electronic device when receiving the transaction completion notification.

12. A smart card sharing method, applied to a second electronic device, wherein the method comprises:
obtaining a first transaction request sent by a near field communication NFC card reader;
sending a first information request to a first electronic device, wherein the first information request is used to obtain transaction information of a first NFC virtual card; and
obtaining first response information returned by the first electronic device, and forwarding the first response information to the NFC card reader, wherein the first response information comprises the transaction information of the first NFC virtual card.

13. The smart card sharing method according to claim 12, wherein before the obtaining a first transaction request sent by a near field communication NFC card reader, the method comprises:
receiving and storing a communications parameter that is of the first NFC virtual card and that is sent by the first electronic device; and
correspondingly, the obtaining a first transaction request sent by a near field communication NFC card reader comprises:
obtaining the first transaction request that is sent by the NFC card reader and that corresponds to the communications parameter.

14. The smart card sharing method according to claim 12, wherein the obtaining a first transaction request sent by a near field communication NFC card reader comprises:
when NFC field strength is detected and the NFC field strength is greater than a preset field strength threshold, establishing an NFC connection channel with the NFC card reader corresponding to the NFC field strength; and
obtaining the first transaction request sent by the NFC card reader through the NFC connection channel.

15. The smart card sharing method according to claim 12, wherein after the sending a first information request to a first electronic device, the method further comprises:
starting a target timer;
sending a wait request to the NFC card reader when the target timer expires and the first response information returned by the first electronic device is not received; and
restarting the target timer when receiving a wait response returned by the NFC card reader; and
correspondingly, the obtaining first response information returned by the first electronic device, and forwarding the first response information to the NFC card reader comprises:
obtaining the first response information returned by the first electronic device, forwarding the first response information to the NFC card reader, and disabling the target timer.

16. The smart card sharing method according to claim 12, wherein the sending a first information request to a first electronic device comprises:
sending the first information request to the first electronic device through a wireless connection channel.

17. The smart card sharing method according to claim 16, wherein the wireless connection channel is a Bluetooth connection channel or a Wi-Fi connection channel.

18. The smart card sharing method according to claim 16, wherein the wireless connection channel is a cellular network connection channel.

19. The smart card sharing method according to claim 12, wherein after the obtaining first response information returned by the first electronic device, and forwarding the first response information to the NFC card reader, the method further comprises:
performing a preset prompt operation when receiving a transaction completion notification sent by the first electronic device.

20. The smart card sharing method according to claim 19, wherein the performing a preset prompt operation when receiving a transaction completion notification sent by the first electronic device comprises:
vibrating and/or displaying preset text information when receiving the transaction completion notification sent by the first electronic device.

21. An electronic device, comprising a memory, a processor, and a computer program that is stored in the memory and that can be run on the processor, wherein when the processor executes the computer program, the electronic device implements the method according to any one of claims 6 to 11 or the method according to any one of claims 12 to 20.

22. A computer-readable storage medium, wherein the computer-readable storage medium stores a computer program, and when the computer program is executed by a processor, an electronic device is enabled to implement the method according to any one of claims 6 to 11 or the method according to any one of claims 12 to 20.
